# EUROPÄISCHE PATENTSCHRIFT

(11) **EP 4 086 206 B1**
(45) Veröffentlichungstag und Bekanntmachung des Hinweises auf die Patenterteilung: **10.07.2024**
(21) Anmeldenummer: 21172144.4
(22) Anmeldetag: 04.05.2021
(51) Int. Cl.: B65G 49/06, B07C 5/36, C03B 29/08, C03B 35/14

(54) **VERFAHREN UND SYSTEM ZUM BELADEN EINER WÄRMEBEHANDLUNGSEINHEIT**
METHOD AND SYSTEM FOR CHARGING A THERMAL TREATMENT UNIT
PROCÉDÉ ET SYSTÈME DE CHARGE D'UNE UNITÉ DE TRAITEMENT THERMIQUE

(43) Veröffentlichungstag der Anmeldung: 09.11.2022
(73) Patentinhaber: Haselsteiner, Hubert, 3332 Biberbach (AT)
(72) Erfinder: Haselsteiner, Hubert, 3332 Biberbach (AT)
(74) Vertreter: KLIMENT & HENHAPEL

(56) Entgegenhaltungen:
- WO-A1-2019/211058
- CN-A- 107 416 528
- DE-A1- 10 164 071

## Beschreibung

### GEBIET DER ERFINDUNG

Die vorliegende Erfindung betrifft ein Verfahren zum Beladen einer Wärmebehandlungseinheit mit plattenförmigen Objekten, insbesondere Glasplatten.

Des Weiteren betrifft die vorliegende Erfindung ein System zum Beladen einer Wärmebehandlungseinheit mit plattenförmigen Objekten, insbesondere Glasplatten.

### STAND DER TECHNIK

Gehärtetes Glas, oft auch als Sicherheitsglas bezeichnet, zeichnet sich durch gute Festigkeit, durch Hitzeresistenz sowie durch ein Bruchverhalten, welches Verletzungen verhindert, aus und wird u.a. bei Eingangstüren, Duschkabinen sowie Türen von Holzöfen und Kaminen eingesetzt.

Aus der CN 107 416 528 A ist eine Sortier- und Fördervorrichtung für Glasscheiben elektronischer Geräte, beispielsweise Glasscheiben für Displays von Mobiltelefonen, bekannt geworden. Jeweils baugleiche Glasscheiben gleicher Größe werden auf einem Förderband transportiert und dabei von einem Sensor einer optischen AOI-Inspektionseinrichtung (Automated Optical Inspection) erfasst. Mittels eines Greif- und Tragmechanismus in Form eines Manipulators mit einem Vakuumsauger werden die Glasscheiben am Förderband vom Vakuumsauger an der Glasoberfläche ergriffen, hochgehoben und anschließend vom Manipulator auf sogenannte Backbleche überführt. Dabei kann eine Sortierung in gute Glasscheiben und in fehlerhafte, beispielsweise zerkratzte Glasscheiben erfolgen, die getrennt voneinander jeweils auf unterschiedliche Backbleche abgelegt werden. Die Backbleche weisen dazu jeweils mehrere gleichgroße Vertiefungen auf, die rasterförmig auf dem Backblech angeordnet sind, wobei jede Vertiefung jeweils eine vom Manipulator übergebene Glasscheibe aufnehmen kann. Die jeweils mit mehreren Glasscheiben belegten Backbleche können übereinander gestapelt werden und erleichtern so die Hantierung der Glasscheiben für nachfolgende, nicht näher bezeichnete Behandlungsschritte. In nachteiliger Weise ist die Sortier- und Fördervorrichtung allerdings nur für jeweils baugleiche Glasscheiben mit den gleichen Abmessungen geeignet. Um Glasscheiben mit geänderter Größe bzw. Glasbreite fördern und sortieren zu können, wie dies beispielsweise bei unterschiedlichen Baureihen von Mobiltelefonen der Fall ist, muss die Sortier- und Fördervorrichtung zuvor jeweils händisch umgerüstet werden, wobei entsprechende Führungsplatten entlang des Förderbands jeweils neu ausgerichtet und neu befestigt werden müssen. Im kontinuierlichen Betrieb ist die in CN 107 416 528 A gezeigte Sortier- und Fördervorrichtung somit nur für Sortieraufgaben im Rahmen von Serienfertigungen jeweils baugleicher Glasscheiben mit denselben Abmessungen geeignet.

Für die Handhabung von beschichteten oder bedruckten Glasplatten, insbesondere von beschichteten bzw. bedruckten Architekturglasplatten mit unterschiedlichsten Abmessungen, die anschließend in einer Wärmebehandlungseinheit gehärtet werden, ist die in CN 107 416 528 A gezeigte Sortier- und Fördervorrichtung auch deshalb nicht geeignet, da beim Hochheben mittels eines oder mehrerer Vakuumsauger die frisch aufgebrachten Beschichtungen auf der Glasoberfläche der Glasplatten beschädigt werden.

Aus der WO 2019/211058 A1 sind ein Sortierverfahren und eine Sortiervorrichtung zum Sortieren von Glastafelzuschnitten in mehreren Fächergestellen bekannt. Weiters wird ein Verfahren zur Herstellung von zugeschnittenen Glastafeln angegeben, wobei die zugeschnittenen Glastafeln wiederum mit dem angegebenen Sortierverfahren in Fächergestelle sortiert werden.

Aus der DE 101 64 071 A1 ist ebenfalls ein Sortierverfahren bekannt, um Glastafeln von einer Bearbeitungslinie sortierend in eine Speichereinrichtung oder in eine Weiterverarbeitungslinie einzuschleusen.

Für die Herstellung von gehärteten Glasplatten sind üblicherweise mehrere Bearbeitungsschritte notwendig. Zu Beginn wird das Glas in einer Schneidlinie in Platten der gewünschten Größe geschnitten. Anschließend werden die Schnittränder der Glasplatten in einer Schleiflinie gesäumt, geschliffen und/oder poliert. Gegebenenfalls durchlaufen die Glasplatten danach eine Siebdrucklinie bevor sie einer Glashärtelinie zugeführt werden, um in einer entsprechenden Wärmebehandlungseinheit erhitzt und danach rasch abgekühlt zu werden, wodurch sich die äußere Oberfläche der Glasplatten schneller zusammenzieht als die Mitte. Dadurch wird den Glasplatten die gute Festigkeit verliehen.

Die Wärmebehandlungseinheit wird hierbei mehr oder weniger konstant auf einer Wärmebehandlungstemperatur von über 600°C gehalten - d.h. die Einstellung der Festigkeit der Glasplatten erfolgt über die Verweildauer der Glasplatten in der Wärmebehandlungseinheit. Hierbei ist zu beachten, dass - bei gleicher zu erzielender Festigkeit der unterschiedlichen Glasplatten - die Verweildauer der Glasplatten mit einer größeren Dicke bzw. mit (dickerer) Beschichtung entsprechend länger gewählt werden muss als die Verweildauer der Glasplatten mit geringerer Dicke bzw. mit dünner oder gar keiner Beschichtung. Daraus folgt einerseits, dass die Glasplatten anhand gewisser Parameter, insbesondere anhand der Dicke und/oder der Beschichtung, zu einer Auswahl sortiert werden müssen, sodass Glasplatten mit gleichen bzw. ähnlichen Parametern gleichzeitig die Wärmebehandlungseinheit durchlaufen, um sicherzustellen, dass einheitliche Festigkeitsergebnisse erzielt werden. Andererseits ist darauf zu achten, dass die innerhalb der Wärmebehandlungseinheit zur Verfügung stehende Fläche bzw. der innerhalb der Wärmebehandlungseinheit zur Verfügung stehende Raum bestmöglich ausgenutzt wird - d.h. dass die Fläche bzw. der Raum möglichst vollständig mit Glasplatten bedeckt bzw. gefüllt ist. In einem einzelnem, beladenem Härtebett darf nur eine Type einer Glasart beladen sein, z.B. nur 4 mm Float Glas oder nur 4 mm low-e beschichtetes Glas oder nur 6 mm Glasdicke mit aufgetragener Emaille-Farbe usw. Zusätzlich dürfen nur Glasscheiben mit annähernd ähnlichem Längen/Seitenverhältnis beladen werden oder die Glasplatten dürfen nur in einer bestimmten Orientierung am Härtebett beladen sein, z.B. nur schmale Glaskante vorlaufend. Durch die Vielfalt der unterschiedlichsten Beladevorgaben ist eine effiziente Verschachtelung der Glasplatten auf einer bestimmten Fläche eine sehr komplexe Aufgabe.

Aufgrund des aufwändigen Sortiervorgangs der Glasplatten und des aufwändigen Bestückungsvorgangs der Wärmebehandlungseinheit kommt es einerseits zu langen Leerlaufzeiten der Wärmebehandlungseinheit, da im Stand der Technik sowohl der Sortiervorgang als auch der Bestückungsvorgang größtenteils manuell durchgeführt werden. Dies ist unwirtschaftlich, da die Wärmebehandlungseinheit auch in Leerlaufzeiten die Wärmebehandlungstemperatur hält, ohne dass es zu einem tatsächlichen Wärmebehandlungsvorgang kommt. Bei aus dem Stand der Technik bekannten Wärmebehandlungseinheiten betragen diese Leerlaufzeiten bis zu 50% der Betriebszeit der Wärmebehandlungseinheit. Andererseits wird die zur Verfügung stehende Fläche innerhalb der Wärmebehandlungseinheit nicht bestmöglich ausgenutzt. D.h. dass zwischen den einzelnen die Wärmebehandlungseinheit durchlaufenden Glasplatten mitunter zahlreiche Freiräume sind. Dies führt ebenfalls zu wirtschaftlichen Verlusten.

### AUFGABE DER ERFINDUNG

Es ist daher eine Aufgabe der vorliegenden Erfindung, ein Verfahren zur Beladung einer Wärmebehandlungseinheit zur Verfügung zu stellen, das die Nachteile des Stands der Technik überwindet. Insbesondere soll mittels des Verfahrens der Durchsatz der plattenförmigen Objekte, insbesondere der Glasplatten, durch die Wärmebehandlungseinheit erhöht werden. Weitere der Erfindung zu Grunde liegende Aufgaben können der nachfolgenden Beschreibung entnommen werden.

### DARSTELLUNG DER ERFINDUNG

Die eingangs gestellte Aufgabe wird erfindungsgemäß durch ein Verfahren zum Beladen einer Wärmebehandlungseinheit, etwa eines Härteofens, mit plattenförmigen Objekten, insbesondere Glasplatten, gelöst, wobei das Verfahren die folgenden Schritte umfasst:
a) Erfassen von jeweils zumindest einem Parameter von plattenförmigen Objekten eines Objektstroms, wobei eine Länge, eine Breite, eine Dicke, ein Durchmesser, eine Beschichtungsart, eine Materialart und/oder eine Chargennummer als Parameter des jeweiligen plattenförmigen Objekts erfasst wird bzw. werden;
b) Einlagern der plattenförmigen Objekte in einer Lagereinheit mit mehreren Einlagerungsorten;
c) Abspeichern von Informationen zum jeweiligen Einlagerungsort und/oder zum jeweiligen zumindest einen erfassten Parameter der jeweiligen plattenförmigen Objekte;
d) Berechnen einer Beladungsanordnung einer Auswahl der plattenförmigen Objekte für die Anordnung der plattenförmigen Objekte dieser Auswahl auf oder in einem Beladesystem, wobei die Berechnung auf Basis der abgespeicherten Informationen sowie unter Berücksichtigung vorgebbarer Haupt- und vorzugsweise Neben- oder Randbedingungen erfolgt;
e) Entnehmen der Auswahl der plattenförmigen Objekte von ihrem jeweiligen Einlagerungsort;
f) Transportieren der Auswahl der plattenförmigen Objekte zum Beladesystem;
g) Übergeben der Auswahl der plattenförmigen Objekte an das Beladesystem in einer der berechneten Beladungsanordnung entsprechenden Beladereihenfolge;
h) Positionieren der Auswahl der plattenförmigen Objekte auf oder in dem Beladesystem, wodurch die Beladungsanordnung hergestellt wird;
i) Befördern der sich in Beladungsanordnung befindlichen Auswahl der plattenförmigen Objekte vom Beladesystem in die Wärmebehandlungseinheit.

Dementsprechend können für ein Objekt des Objektstromes zunächst die Schritte a), b) und c) nacheinander ausgeführt werden. Dabei kann aber bereits während die Schritte b) oder c) für das eine Objekt durchgeführt werden, der Schritt a) für ein anderes Objekt des Objektstromes durchgeführt werden; in anderen Worten: einer oder mehrere der Schritte a) bis c) können für unterschiedliche Objekte des Objektstromes gleichzeitig ausgeführt werden bzw. es muss nicht einer der Schritte a) bis c) für sämtliche oder mehrere Objekte des Objektstromes durchgeführt werden, bevor ein anderer der Schritte a) bis c) ausgeführt werden kann. Bei Schritt d) können nur solche Objekte berücksichtigt werden, für die Schritt c) bereits abgeschlossen wurde.

Zunächst ist festzuhalten, dass das erfindungsgemäße Verfahren automatisiert ablaufen kann. Die plattenförmigen Objekte werden aus einem Lagergestell, beispielsweise aus einer Regalanordnung oder aus einem Zuliefergestell, insbesondere einem L- oder A-Gestell, oder aus einem Fächerwagen entnommen und werden auf einen Einlaufabschnitt einer Fertigungsstraße, vorzugsweise in einer Vertikalanordnung - also stehend -, aufgestellt; alternativ können die plattenförmigen Objekte aber auch, vorzugsweise in einer Horizontalanordnung - also liegend -, auf den Einlaufabschnitt aufgelegt werden. Dementsprechend bilden die entnommenen plattenförmigen Objekte einen Objektstrom für das erfindungsgemäße Verfahren. Gleichzeitig oder anschließend wird für einzelne oder sämtliche der plattenförmigen Objekte dieses Objektstromes zumindest ein Parameter erfasst, welcher Parameter beispielsweise in Form eines Etiketts kodiert auf dem Objekt hinterlegt sein kann. Nach dem Erfassen des zumindest einen Parameters wird das jeweilige plattenförmige Objekt an einem Einlagerungsort der Lagereinheit eingelagert. Es ist auch denkbar, dass Objekte des Objektstromes in der Lagereinheit eingelagert werden, ohne dass unmittelbar davor zumindest ein Parameter dieser Objekte erfasst wurde.

Es ist vorstellbar, dass die Lagereinheit mehrere horizontal und/oder vertikal angeordnete und zur Aufnahme plattenförmiger Objekte ausgebildete Fächer umfasst, wobei jedes Fach einen oder mehrere Einlagerungsorte aufweisen kann.

Anschließend werden Informationen zum jeweiligen Einlagerungsort und/oder zum jeweiligen zumindest einen erfassten Parameter der jeweiligen plattenförmigen Objekte abgespeichert, beispielsweise auf einem Datenträger, etwa einer Festplatte oder einem USB-Stick, oder in einer Datenwolke (Cloud-Speicher). Alternativ werden diese Informationen in einer Weise erfasst, sodass sie für die Berechnung der Beladungsanordnung verwendet werden können.

Es ist vorstellbar, dass sich die plattenförmigen Objekte lediglich in einer ihrer Abmessungen, beispielsweise ihrer Höhe, oder in einer ihrer Eigenschaften, beispielsweise ihrer Materialart, unterscheiden. In diesem Fall kann die Lagereinheit in mehrere Bereiche mit einem oder mehreren Einlagerungsorten unterteilt sein, in welchen Bereichen jeweils plattenförmige Objekte mit identischen Abmessungen/Eigenschaften eingelagert werden. Hierbei müsste dann lediglich der jeweilige Einlagerungsort abgespeichert werden, da sich die jeweiligen Parameter bereits aus dem jeweiligen Bereich bzw. Einlagerungsort ergeben.

Auf Basis der abgespeicherten Informationen sowie unter Berücksichtigung der vorgebbaren Hauptbedingungen wird nun eine Beladungsanordnung einer Auswahl der plattenförmigen Objekte berechnet. D.h. durch die Berechnung der Beladungsanordnung ergibt sich die Auswahl der plattenförmigen Objekte, wobei es sich bei der Auswahl um eine Teilmenge der Gesamtmenge an eingelagerten plattenförmigen Objekten handeln kann. Selbstverständlich ist es auch möglich, dass eine Auswahl an plattenförmigen Objekten vorgegeben wird und daraus eine Beladungsanordnung berechnet wird. Ebenfalls ist nicht ausgeschlossen, dass die Auswahl lediglich ein einziges plattenförmiges Objekt beinhaltet. Typischerweise werden im Rahmen der Berechnung aber zwei oder mehrere der eingelagerten plattenförmigen Objekte mit teils unterschiedlichen Eigenschaften, insbesondere mit unterschiedlicher Größe, ausgewählt, die in einer entsprechend den Hauptbedingungen und ggf. Nebenbedingungen entsprechenden optimalen Anordnung (auf oder in dem Beladesystem) angeordnet werden sollen. Die Beladungsanordnung stellt folglich jene Anordnung der Auswahl der plattenförmigen Objekte dar, in welcher Anordnung diese plattenförmigen Objekte (auf oder in dem Beladesystem angeordnet und von dort) in die Wärmebehandlungseinheit befördert werden sollen.

Das Beladesystem kann als Beladetisch, Einlauftisch, Bett oder Härtebett ausgebildet sein.

Bei der Berechnung der Beladungsanordnung handelt es sich demnach um ein Optimierungsproblem (Optimierungsaufgabe), welches durch an sich bekannte numerische Methoden gelöst werden kann. Dabei können neben den Haupt- auch Neben- oder Randbedingungen berücksichtigt werden, welche Neben- oder Randbedingungen die Lösung des Optimierungsproblems, also die Beladungsanordnung, zusätzlich erfüllen soll. Zur numerischen Lösung des Optimierungsproblems können beispielsweise folgende Verfahren angewandt werden: Bergsteigeralgorithmus, BFGS-Verfahren, Branch-and-Bound, Schnittebenenverfahren, Branch-and-Cut, Pivotverfahren, Simplex-Verfahren, Downhill-Simplex-Verfahren, Innere-Punkte-Verfahren, Logarithmisches Barriereverfahren, Simulierte Abkühlung (Simulated Annealing).

Bei der Berechnung der Beladungsanordnung können Informationen betreffend einzelne oder sämtliche der anfangs erfassten Parameter der jeweiligen plattenförmigen Objekte und/oder Informationen betreffend deren Einlagerungsort berücksichtigt werden. Beispielsweise ist es denkbar, dass anfangs sowohl Längenmaße als auch ein Verkaufspreis und ein Liefertermin eines plattenförmigen Objektes erfasst wurden, bei der Berechnung der Beladungsanordnung nun jedoch nur Informationen betreffend die Längenmaße berücksichtigt werden. Dadurch kann die Berechnung deutlich effizienter und schneller erfolgen; dennoch können die nicht berücksichtigten Informationen des jeweiligen plattenförmigen Objektes abgespeichert oder für weitere Bearbeitungsschritte verwendet werden.

Nach der Berechnung der Beladungsanordnung erfolgen das Entnehmen der Auswahl der plattenförmigen Objekte vom jeweiligen Einlagerungsort und der Transport dieser plattenförmigen Objekte zum Beladesystem. Die Auswahl der plattenförmigen Objekte wird schließlich an das Beladesystem in der der berechneten Beladungsanordnung entsprechenden Beladereihenfolge, in welcher Beladereihenfolge die Auswahl auf oder in dem Beladesystem zu positionieren ist, übergeben und auf oder in dem Beladesystem positioniert. Durch entsprechende Positionierung sämtlicher plattenförmiger Objekte der Auswahl auf oder in dem Beladesystem wird die Beladungsanordnung der Auswahl, also das Härtebett, mit dem die Wärmebehandlungseinheit beladen werden soll, hergestellt. Vorzugsweise erfolgen das Entnehmen und/oder der Transport der Auswahl der plattenförmigen Objekte bereits in der Beladereihenfolge. Es ist aber auch denkbar, dass die Entnahme selbst noch nicht in Beladereihenfolge geschieht und die Anordnung der plattenförmigen Objekte der Auswahl entsprechend der Beladereihenfolge erst im Zuge des Transports der plattenförmigen Objekte zum Beladesystem hergestellt wird. Hier kann es auch passieren, dass einzelne Objekte der Auswahl andere Objekte dieser Auswahl im Zuge des Transports überholen.

Sobald die gesamte Auswahl der plattenförmigen Objekte auf oder in dem Beladesystem positioniert ist, wird die gesamte Beladungsanordnung (also sämtliche plattenförmige Objekte der Auswahl in der Beladungsanordnung) vom Beladesystem in die Wärmebehandlungseinheit befördert. Die Wärmebehandlungseinheit kann dabei durch einen Härteofen ausgebildet sein und darüber hinaus auch eine Quench- oder Abschreckeinheit mit einer Abkühleinheit umfassen.

Beim Beladesystem handelt es sich vorzugsweise um einen Beladetisch bzw. ein Härtebett umfassend eine Beladungsfläche (oder Beladefläche), auf welcher die Auswahl der plattenförmigen Objekte positioniert wird, um die Beladungsanordnung herzustellen.

Durch das erfindungsgemäße Verfahren kann der Durchsatz, bei welchem es sich um die Anzahl der in einer bestimmten Zeiteinheit die Wärmebehandlungseinheit durchlaufenden plattenförmigen Objekte handelt, durch die Wärmebehandlungseinheit deutlich erhöht werden. D.h. verglichen mit dem Stand der Technik können pro Zeiteinheit mehr plattenförmige Objekte wärmebehandelt werden. Dies ist insbesondere auf den Umstand zurückzuführen, dass die plattenförmigen Objekte der Auswahl in der "richtigen" Reihenfolge, also in der Beladereihenfolge, und in besonders zeitsparender Art und Weise an das Beladesystem übergeben werden können, da die Beladungsanordnung für die gesamte Auswahl plattenförmiger Objekte im Vorfeld der Beladung berechnet wird und die plattenförmigen Objekte aufgrund ihrer Einlagerung an verschiedenen Einlagerungsorten im Wesentlichen in beliebiger Reihenfolge aus der Lagereinheit entnommen werden können bzw. zugänglich sind - d.h. auch schon in Beladereihenfolge entnommen, transportiert und an das Beladesystem übergeben werden können. Im Gegensatz dazu müssen die plattenförmigen Objekte im Stand der Technik im Wesentlichen entsprechend ihrer durch den Objektstrom vorgegebenen Reihenfolge auf oder in dem Beladesystem angeordnet werden, oder es müssen - um die Objekte in anderer Reihenfolge bearbeiten zu können - mühsame und aufwändige Sortiervorgänge manuell durchgeführt werden.

Beispielsweise müssen Glasplatten im Stand der Technik aus einem Fächerwagen, in welchem sie entsprechend ihrer Größe hintereinander bzw. parallel zueinander eingeschlichtet sind, in eben jener Reihenfolge entnommen (und manuell auf das Härtebett aufgelegt) werden, die sich aus der Anordnung der Glasplatten im Fächerwagen ergibt; bei Entnehmen der Glasplatten in einer anderen Reihenfolge besteht nämlich eine hohe Gefahr hinsichtlich Kratz- oder Bruchschäden. Somit sind die möglichen Beladungsanordnungen der im Fächerwagen befindlichen Glasplatten durch die vorgegebene Reihenfolge, in der die Glasplatten entnommen und auf dem Härtebett positioniert werden müssen, sehr stark eingeschränkt. Hingegen ermöglicht das erfindungsgemäße Verfahren eine Übergabe der plattenförmigen Objekte des Objektstromes an das Beladesystem in sehr flexibler Weise bzw. in beliebiger Reihenfolge. Dadurch wird es möglich, die plattenförmigen Objekte in einer der optimierten Beladungsanordnung entsprechenden Beladereihenfolge an das Beladesystem zu übergeben, anstatt die plattenförmigen Objekte in einer bereits durch die vorgegebene Reihenfolge bestimmten Beladungsanordnung auf dem Beladesystem anordnen zu müssen. Dennoch ermöglicht das erfindungsgemäße Verfahren die Beibehaltung der im Stand der Technik üblichen und eingespielten Arbeitsabläufe insofern, als die plattenförmigen Objekte mittels Fächerwagen antransportiert und manuell entladen werden können; der einzige Unterschied besteht für den Arbeiter darin, dass die plattenförmigen Objekte nicht auf dem Beladesystem angeordnet sondern auf den Einlaufabschnitt der Fertigungsstraße aufgelegt bzw. abgestellt werden müssen. Somit ermöglicht die vorliegende Erfindung eine enorme Effizienzsteigerung, ohne dass hierzu Änderungen an bestehenden Wärmebehandlungssystemen vorgenommen werden müssten. Dem Beladesystem bestehender Systeme muss lediglich das erfindungsgemäße Verfahren vorangehen. Da die Beladereihenfolge erfindungsgemäß somit einer optimierten Beladungsanordnung folgt, während im Stand der Technik die möglichen Beladungsanordnungen bereits durch die Reihenfolge festgelegt sind, in welcher die plattenförmigen Objekte angeliefert werden, kann die Beladung der Wärmebehandlungseinheit somit viel schneller und effizienter als bisher erfolgen, sodass sich insgesamt der Nutzungsgrad der Wärmebehandlungseinheit wesentlich verbessern oder sogar verdreifachen lässt.

Um den Durchsatz der plattenförmigen Objekte durch die Wärmebehandlungseinheit weiter zu erhöhen, ist in einer Ausführungsvariante der Erfindung vorgesehen, dass basierend auf der Beladungsanordnung bzw. Beladereihenfolge vor dem Schritt e) durch Veränderung des Einlagerungsortes eines oder mehrerer der plattenförmigen Objekte eine Vorsortierung erfolgt.

Die Veränderung des Einlagerungsorts eines plattenförmigen Objektes bzw. der Einlagerungsorte mehrerer plattenförmigen Objekte kann durch Entnehmen aus der Lagereinheit und anschließendes (Wieder-) Einlagern eines oder mehrerer plattenförmiger Objekte in der Lagereinheit erfolgen. Alternativ können die plattenförmigen Objekte ihren Einlagerungsort auch wechseln, ohne die Lagereinheit zu verlassen; d.h. die Lagereinheit kann so ausgebildet sein, dass die in der Lagereinheit eingelagerten plattenförmigen Objekte von einem ersten Einlagerungsort an zumindest einen weiteren, vorzugsweise mehrere weitere Einlagerungsorte verbracht werden können, etwa indem die Lagereinheit als dynamisches Regalsystem ausgebildet ist. Dadurch können die plattenförmigen Objekte innerhalb der Lagereinheit basierend auf der Beladereihenfolge derart vorsortiert werden, dass die Auswahl der plattenförmigen Objekte noch rascher aus der Lagereinheit entnommen werden kann. Beispielsweise kann die Auswahl der plattenförmigen Objekte im Rahmen der Vorsortierung an direkt nebeneinanderliegenden oder besonders gut und/oder schnell zugänglichen Einlagerungsorten der Lagereinheit eingelagert werden.

In einer weiteren Ausführungsvariante der Erfindung ist vorgesehen, dass basierend auf der entsprechenden Beladungsanordnung bzw. Beladereihenfolge vor dem Schritt e) durch Entnehmen eines oder mehrerer der plattenförmigen Objekte aus der Lagereinheit und Einlagern in einer weiteren Lagereinheit mit mehreren Einlagerungsorten eine Vorsortierung erfolgt. D.h. zumindest ein plattenförmiges Objekt wird aus seinem Einlagerungsort in der Lagereinheit entnommen und derart an einem Einlagerungsort in der weiteren Lagereinheit eingelagert, dass die Auswahl noch zeiteffizienter auf oder in dem Beladesystem angeordnet werden kann. D.h. die weitere Lagereinheit ermöglicht eine noch flexiblere Einlagerung und somit auch Entnahme plattenförmiger Objekte; effektiv wird durch weitere Lagereinheiten eine noch bessere Vorsortierung der als nächstes zur Weiterbearbeitung vorgesehenen Objekte ermöglicht.

Vorzugsweise werden plattenförmige Objekte der Auswahl in direkt nebeneinanderliegenden und/oder schnell zugänglichen Einlagerungsorten der weiteren Lagereinheit und/oder der Lagereinheit eingelagert, sodass die Entnahme der plattenförmigen Objekte der Auswahl besonders rasch erfolgen kann.

Um die plattenförmigen Objekte entsprechend kategorisieren zu können und die Beladungsanordnung optimal berechnen zu können, ist gemäß der Erfindung vorgesehen, dass eine Länge, eine Breite, eine Dicke, ein Durchmesser, eine Beschichtungsart, eine Materialart und/oder eine Chargennummer als Parameter des jeweiligen plattenförmigen Objekts erfasst wird.

D.h. es wird entweder die Länge oder die Breite oder die Dicke oder der Durchmesser oder die Beschichtungsart oder die Materialart oder die Chargennummer als Parameter des jeweiligen plattenförmigen Objekts erfasst. Alternativ kann bzw. können auch eine oder mehrere Kombinationen der zuvor genannten Daten als Parameter erfasst werden. Es ist beispielsweise vorstellbar, dass sowohl Länge und Breite als auch Beschichtungsart, Materialart und/oder Chargennummer des jeweiligen plattenförmigen Objekts erfasst werden.

Besonders bevorzugt werden die plattenförmigen Objekte nach der Erfassung des zumindest einen Parameters hinsichtlich einzelner oder sämtlicher der erfassten Parameter überprüft. Dies kann beispielsweise erreicht werden, indem die plattenförmigen Objekte des Objektstromes zunächst manuell aus einem Fächerwagen entnommen und auf einem Einlaufabschnitt einer Fertigungsstraße angeordnet werden. Anschließend kann durch Scannen eines auf dem plattenförmigen Objekt vorhandenen Etiketts oder eines dem Objekt zugeordneten Produktionspapiers oder dgl. der zumindest eine Parameter erfasst und das plattenförmige Objekt zu einer Kontrolleinheit weitergefördert werden. Mittels dieser Kontrolleinheit wird nun das plattenförmige Objekt hinsichtlich eines oder sämtlicher der erfassten Parameter überprüft, d.h. es wird geprüft, ob das plattenförmige Objekt tatsächlich die auf dem Etikett oder Produktionspapiers oder dgl. hinterlegten Parameter (z.B. Größe, Dicke, Materialart, Beschichtung) aufweist. Fallen bei dieser Kontrolle Unstimmigkeiten auf, so können die fehlerhaften erfassten Parameter durch die mittels der Kontrolleinheit erfassten Parameter ersetzt werden. Darüber hinaus kann mittels der Kontrolleinheit auch eine Orientierung bzw. Positionierung des plattenförmigen Objektes, insbesondere hinsichtlich einer etwaigen Beschichtung, überprüft und ggf. manuell korrigiert werden.

Auf diese Weise kann sichergestellt werden, dass in die Berechnung der Beladungsanordnung ausschließlich korrekte Parameter der jeweiligen plattenförmigen Objekte einfließen, wodurch fehlerhafte Beladungsanordnungen vermieden werden können.

Nach der Erfassung des zumindest einen Parameters und der anschließenden Kontrolle kann das auf dem jeweiligen plattenförmigen Objekt angebrachte Etikett, Produktionspapier oder dgl. entfernt werden. Um nach der Wärmebehandlung eine korrekte Zuordnung der jeweiligen Parameter zu dem jeweiligen plattenförmigen Objekt zu ermöglichen, kann der zumindest eine, vorzugsweise alle erfassten, Parameter und/oder der Einlagerungsort des jeweiligen plattenförmigen Objektes und/oder die Beladungsanordnung der jeweiligen Auswahl plattenförmiger Objekte an eine der Wärmebehandlungseinheit nachgeordnete Bearbeitungsstation der Fertigungsstraße übergeben werden. Beispielsweise kann diese nachgeordnete Bearbeitungsstation als Scanner ausgebildet sein, der die aus der Wärmebehandlungseinheit auslaufenden plattenförmigen Objekte bzw. deren Anordnung erfasst.

So kann einerseits eine eindeutige Identifizierung jedes plattenförmigen Objektes sowie eine eindeutige Zuordnung zwischen jedem einzelnen plattenförmigen Objekt einer bestimmten Anordnung und den anfangs erfassten Parametern sichergestellt werden; andererseits kann auf diese Weise auch erkannt werden, ob sämtliche plattenförmige Objekte einer bestimmten Auswahl die Wärmebehandlung unbeschadet überstanden haben, oder ob einzelne dieser Objekte Schäden aufweisen. Schließlich kann die jeweilige Auswahl nach dem Durchlaufen der Wärmebehandlungseinheit auf einem Entladesystem (Auslaufbett) angeordnet und wieder mit entsprechenden Etiketten, Produktionspapieren oder dgl. versehen werden.

Um eine kontinuierliche Beschickung der Wärmebehandlungseinheit zu gewährleisten, ist in einer weiteren Ausführungsvariante der Erfindung vorgesehen, dass nach dem Befördern der Beladungsanordnung in die Wärmebehandlungseinheit eine weitere Auswahl der plattenförmigen Objekte auf oder in dem Beladesystem positioniert wird, um eine weitere Beladungsanordnung herzustellen. D.h. nachdem, vorzugsweise unmittelbar nachdem, die Beladungsanordnung in die Wärmebehandlungseinheit befördert wurde, wird eine weitere Beladungsanordnung auf oder in dem Beladesystem positioniert. Sobald die Beladungsanordnung einen Abschnitt der Wärmebehandlungseinheit, etwa den Härteofen oder einen Abschnitt des Härteofens, durchlaufen hat, kann die weitere Beladungsanordnung in die Wärmebehandlungseinheit, etwa den Härteofen, befördert werden. Es ist auch vorstellbar, dass die weitere Beladungsanordnung bereits in die Wärmebehandlungseinheit eingeführt wird, während der Wärmebehandlungsvorgang der vorhergehenden Beladungsanordnung noch nicht abgeschlossen ist - d.h. während sich die vorhergehende Beladungsanordnung zumindest teilweise noch innerhalb der Wärmebehandlungseinheit, etwa in der Quench-, Abschreck- oder Abkühleinheit, befindet. Dies ist vor allem dann denkbar, wenn die nächstfolgende Beladungsanordnung ebenso schnell oder sogar schneller hergestellt werden kann als es dauert, die gesamte vorhergehende Beladungsanordnung wärmezubehandeln. Vorteilhafter Weise können die plattenförmigen Objekte einer Auswahl in diesen Fällen nicht erst entsprechend der Beladungsanordnung angeordnet sein, wenn sich die plattenförmigen Objekte dieser Auswahl in oder auf dem Beladesystem befinden, sondern etwa schon während des Transports der Auswahl (Schritt f). Diese Ausführungsvariante der Erfindung ermöglicht somit eine kontinuierliche Wärmebehandlung und somit einen besonders hohen Durchsatz.

In einer weiteren Ausführungsvariante der Erfindung ist vorgesehen, dass es sich bei den plattenförmigen Objekten um Glasplatten handelt. Bei Glasplatten dauert - aufgrund ihrer Eigenschaften, wie beispielsweise Gewicht und Sprödigkeit - die Beladung des Beladesystems im Stand der Technik besonders lang, weshalb das erfindungsgemäße Verfahren hinsichtlich des Durchsatzes von Glasplatten durch die Wärmebehandlungseinheit ein sehr großes Optimierungspotenzial bietet.

Abhängig davon, ob das Beladesystem möglichst dicht und/oder möglichst schnell mit der Auswahl der plattenförmigen Objekte beladen werden soll, können für die Berechnung der Beladungsanordnung unterschiedliche Haupt-, Rand-, oder Nebenbedingungen vorgegeben werden. In einer weiteren Ausführungsvariante der Erfindung ist deshalb vorgesehen, dass es sich bei den Hauptbedingungen um eine Maximierung einer Packungsdichte des Beladesystems und/oder um eine Minimierung der Beladezeit des Beladesystems handelt. Unter der Beladezeit wird in diesem Zusammenhang jene Zeitspanne verstanden, die benötigt wird, um die Auswahl der plattenförmigen Objekte aus der Lagereinheit zu entnehmen, zum Beladesystem zu transportieren, auf oder in dem Beladesystem zu positionieren und die Beladeanordnung der Auswahl der plattenförmigen Objekte in die Wärmebehandlungseinheit zu befördern. Als Neben- oder Randbedingungen können bei der Berechnung etwa bauliche Gegebenheiten des Beladesystems und/oder die Vorgabe, dass die Auswahl nur Objekte mit bestimmten Bedingungen (Eigenschaften, Parametern) umfassen darf, berücksichtigt werden. Bei den angesprochenen baulichen Bedingungen kann es sich beispielsweise um die Beabstandung etwaiger Fördermittel, etwa Riemenförderer oder Förderrollen, des Beladesystems handeln; dementsprechend dürfen beispielsweise plattenförmige Objekte, deren Breite kleiner als diese Beabstandung ist, nur der Länge nach auf dem Beladesystem angeordnet werden, um dort sicher gelagert und/oder gefördert werden zu können. Dadurch kann die Beladungsanordnung solchen Vorgaben Rechnung tragen.

Wenn es sich bei dem Beladesystem beispielsweise um einen Beladetisch handelt, dann entspricht die Maximierung der Packungsdichte einer Minimierung einer Leerfläche des Beladetisches.

In einer weiteren Ausführungsvariante der Erfindung ist vorgesehen, dass zwei oder mehrere der Schritte e), f), g) und h) für unterschiedliche plattenförmige Objekte derselben Auswahl zeitgleich durchgeführt werden. Dies stellt sicher, dass es zu keinen längeren Leerlaufzeiten der Wärmebehandlungseinheit kommt, da zwei oder mehrere Schritte des erfindungsgemäßen Verfahrens parallel ablaufen.

D.h. beispielsweise kann ein Teil der Auswahl der plattenförmigen Objekte aus der Lagereinheit entnommen werden, während ein zweiter Teil der Auswahl der plattenförmigen Objekte bereits zum Beladesystem transportiert wird. Es ist außerdem vorstellbar, dass gleichzeitig ein dritter Teil der Auswahl der plattenförmigen Objekte gleichzeitig an das Beladesystem übergeben wird und ein vierter Teil der Auswahl der plattenförmigen Objekte auf oder in dem Beladesystem positioniert wird. Selbstverständlich können auch andere Kombinationen der Schritte e), f), g) und h) zeitgleich ablaufen.

In diesem Zusammenhang wird festgehalten, dass auch die Schritte a), b), c) und i) zumindest teilweise zeitgleich zu den Schritten e), f), g) und h) ablaufen können, jedoch nur für Objekte unterschiedlicher Auswahlen.

Um sicherzustellen, dass die Objekte nach der Wärmebehandlung identifizierbar und/oder zuordenbar sind, ist in einer weiteren Ausführungsvariante der Erfindung vorgesehen, dass die abgespeicherten Informationen plattenförmiger Objekte an eine der Wärmebehandlungseinheit nachgeordnete Bearbeitungsstation, etwa einen Scanner, ein Entladesystem und/oder ein Auslaufbett, übergeben werden.

Es ist vorstellbar, dass die plattenförmigen Objekte nach dem Durchlaufen der Wärmebehandlungseinheit anhand der übergebenen Informationen, insbesondere anhand der übergebenen Chargennummer, sortiert, weiterverarbeitet und/oder einlagert werden und/oder dass die plattenförmigen Objekte auf Basis der übergebenen Information wieder mit Etiketten, Produktionspapieren oder dgl. versehen werden, d.h. dass zumindest Teile der übergebenen Informationen beispielsweise in Form eines einen Strich- oder Barcode umfassenden und auf die Oberfläche des jeweiligen plattenförmigen Objekts aufgeklebten Klebeetiketts den plattenförmigen Objekten der Auswahl zugeordnet werden.

Zur Lösung einer der Erfindung zu Grunde liegenden Aufgabe ist auch ein System zum Beladen einer Wärmebehandlungseinheit mit plattenförmigen Objekten, insbesondere Glasplatten, vorgesehen, das System umfassend
- eine Erfassungseinheit zum Erfassen von jeweils zumindest einem Parameter plattenförmiger Objekte eines Objektstroms, wobei die Erfassungseinheit als Parameter des jeweiligen plattenförmigen Objekts eine Länge, eine Breite, eine Dicke, einen Durchmesser, eine Beschichtungsart, eine Materialart und/oder eine Chargennummer erfasst,
- zumindest eine Lagereinheit mit mehreren Einlagerungsorten zur Aufnahme plattenförmiger Objekte,
- zumindest eine Bearbeitungseinheit zum Beladen und/oder Entladen der Lagereinheit mit plattenförmigen Objekten,
- ein Beladesystem zur Aufnahme plattenförmiger Objekte in einer Beladungsanordnung,
- eine Steuerungseinheit zur Berechnung der Beladungsanordnung, wobei die Erfassungseinheit, die zumindest eine Bearbeitungseinheit, die zumindest eine Lagereinheit und das Beladesystem in einer Objektförderrichtung hintereinander angeordnet und als Fertigungsstraße miteinander verbunden sind.

Die Fertigungsstraße kann sich von einer Quelle des Objektstroms, beispielsweise von einem Lager, einem Gestell, oder einem Fächerwagen, bis zu einer der Wärmebehandlungseinheit nachgeordneten Station, beispielsweise bis zu einer der Wärmebehandlungseinheit nachgeordneten Bearbeitungsstation erstrecken. D.h. vor der Erfassungseinheit und/oder nach der Wärmebehandlungseinheit können jeweils eine oder mehrere weitere Stationen der Fertigungsstraße vorgesehen sein. Selbstverständlich können auch zwischen der Erfassungseinheit und der Bearbeitungseinheit und/oder zwischen der Bearbeitungseinheit und der zumindest einen Lagereinheit und/oder zwischen der Lagereinheit und dem Beladesystem eine oder mehrere weitere Stationen angeordnet sein.

Die Objektförderrichtung legt die Richtung fest, in welcher die plattenförmigen Objekte die Fertigungsstraße durchlaufen.

Bei der zumindest einen Bearbeitungseinheit kann es sich vorzugsweise um ein auf Schienen verfahrbar angeordnetes Shuttle (Lager-Shuttle, auch Kanalfahrzeug oder Satellitenfahrzeug) handeln. Es ist vorstellbar, dass unter der "Bearbeitung" der zumindest einen Bearbeitungseinheit lediglich eine Ortsveränderung der plattenförmigen Objekte zu verstehen ist. Selbstverständlich ist nicht ausgeschlossen, dass die Bearbeitungseinheit auch weitere Bearbeitungsschritte, wie beispielsweise eine Reinigung der Oberflächen der plattenförmigen Objekte, durchführen kann.

Zusammenfassend lässt sich sagen, dass mittels des erfindungsgemäßen Systems der Durchsatz der plattenförmigen Objekte durch die Wärmebehandlungseinheit erhöht werden kann, da das System zur Durchführung des oben beschriebenen Verfahrens ausgelegt ist und somit sämtliche der oben beschriebenen Vorteile auch durch das System erreicht werden können.

In einer weiteren Ausführungsvariante der Erfindung ist vorgesehen, dass die Steuerungseinheit ausgelegt ist, um mittels der jeweiligen erfassten Parameter und/oder der jeweiligen Einlagerungsorte sowie unter Berücksichtigung vorgebbarer Haupt- und ggf. Neben- oder Randbedingungen eine Beladungsanordnung der Auswahl der plattenförmigen Objekte auf oder in dem Beladesystem zu berechnen. D.h. die Steuerungseinheit ermöglicht die Berechnung der optimalen Beladungsanordnung auf Basis von Informationen zu den erfassten Parametern sowie den Einlagerungsorten der plattenförmigen Objekte. Neben Hauptbedingungen, gemäß derer das Optimierungsproblem gelöst werden soll, können dabei auch Neben- oder Randbedingungen berücksichtigt werden. Die Hauptbedingungen können - wie bereits zuvor erwähnt - eine Maximierung der Packungsdichte und/oder eine Minimierung der Beladezeit des eine bestimmte Beladungsfläche oder ein bestimmtes Beladungsvolumen aufweisenden Beladesystems - und somit der Wärmebehandlungseinheit - betreffen, wodurch die Steuerungseinheit eine möglichst dichte Anordnung der Auswahl plattenförmiger Objekte auf oder in dem Beladesystems und/oder eine möglichst zeiteffiziente Beladung des Beladesystems berechnet. Sowohl durch die Maximierung der Packungsdichte als auch durch die Minimierung der Beladezeit lässt sich die Nutzung der Wärmebehandlungseinheit verbessern bzw. erhöhen. Als Neben- oder Randbedingungen kann etwa die Verwendung ausschließlich beschichteter plattenförmiger Objekte vorgegeben werden, oder auch die Einschränkung der zu bestimmenden Auswahl auf plattenförmige Objekte mit anderen bestimmten Eigenschaften (Abmessung, Charge, etc.).

Besonders bevorzugt werden die plattenförmigen Objekte nach der Erfassung des zumindest einen Parameters durch die Erfassungseinheit hinsichtlich einzelner oder sämtlicher der erfassten Parameter überprüft. Dazu umfasst das System in einer bevorzugten Ausführungsvariante eine Kontrolleinheit, die bevorzugt zwischen Erfassungseinheit und Lagereinheit angeordnet ist. Mittels dieser Kontrolleinheit wird nun das plattenförmige Objekt hinsichtlich eines oder sämtlicher der erfassten Parameter überprüft, d.h. es wird geprüft, ob das plattenförmige Objekt tatsächlich die auf dem entsprechenden Etikett oder Produktionspapier oder dgl. hinterlegten und mittels der Erfassungseinheit erfassten Parameter (z.B. Größe, Dicke, Materialart, Beschichtung) aufweist. Fallen bei dieser Kontrolle Unstimmigkeiten auf, so können fehlerhafte Parameter durch die mittels der Kontrolleinheit erfassten Parameter ersetzt werden. Darüber hinaus kann mittels der Kontrolleinheit auch eine Orientierung bzw. Positionierung des plattenförmigen Objektes, insbesondere hinsichtlich einer etwaigen Beschichtung, überprüft und ggf. manuell korrigiert werden.

Auf diese Weise kann sichergestellt werden, dass in die Berechnung der Beladungsanordnung ausschließlich korrekte Parameter der jeweiligen plattenförmigen Objekte einfließen, wodurch fehlerhafte Beladungsanordnungen vermieden werden können.

Um genügend Platz für eine Vorsortierung der plattenförmigen Objekte zu haben, ist in einer weiteren Ausführungsvariante der Erfindung vorgesehen, dass das System eine weitere Lagereinheit umfassend mehrere Einlagerungsorte zur Aufnahme plattenförmiger Objekte aufweist, wobei die weitere Lagereinheit Teil der Fertigungsstraße ist. Die weitere Lagereinheit gewährleistet - aufgrund der noch effizienteren Vorsortierung der plattenförmigen Objekte - eine rasche Entnahme der plattenförmigen Objekte, da diese entsprechend, beispielsweise in der Beladereihenfolge, in direkt nebeneinander angeordneten und/oder besonders gut zugänglichen Einlagerungsorten eingelagert werden können, wodurch die Bearbeitungseinheit bei der Entnahme der entsprechenden plattenförmigen Objekte keine weiten Wege zurücklegen muss und somit die Beladeanordnung noch schneller hergestellt werden kann.

In einer weiteren Ausführungsvariante der Erfindung ist vorgesehen, dass das System eine weitere Bearbeitungseinheit, beispielsweise ein weiteres Shuttle, zum Beladen und/oder Entladen der weiteren Lagereinheit mit plattenförmigen Objekten aufweist. Dadurch lässt sich die Geschwindigkeit des Beladens und/oder Entladens der weiteren Lagereinheit erhöhen.

Es ist vorstellbar, dass in diesem Fall die weitere Bearbeitungseinheit in Objektförderrichtung gesehen direkt hinter der zumindest einen Lagereinheit angeordnet ist.

In einer weiteren Ausführungsvariante der Erfindung ist vorgesehen, dass
a) die Bearbeitungseinheit für das Beladen und das Entladen der Lagereinheit sowie für das Beladen und das Entladen der weiteren Lagereinheit angeordnet und ausgebildet ist,
   oder, dass
b) die Bearbeitungseinheit für das Beladen der Lagereinheit angeordnet und ausgebildet ist und
c) die weitere Bearbeitungseinheit für das Entladen der Lagereinheit sowie für das Beladen der weiteren Lagereinheit angeordnet und ausgebildet ist.

D.h. in der ersten Variante (a) übernimmt die Bearbeitungseinheit sämtliche Belade- und Entladevorgänge der beiden Lagereinheiten. Dadurch können Anschaffungskosten und Wartungskosten der Fertigungsstraße eingespart und der Aufbau des Systems besonders einfach gehalten werden.

Es ist vorstellbar, dass die Bearbeitungseinheit einen Transportwagen umfasst, der auf Schienen verfahrbar angeordnet ist, etwa ein Shuttle, wobei die Schienen zumindest abschnittsweise zwischen der Lagereinheit und der weiteren Lagereinheit angeordnet sind.

Durch die zweite Variante (b, c) dieser Ausführungsform des erfindungsgemäßen Systems kann die Bearbeitungszeit weiter optimiert werden, da zwei Bearbeitungseinheiten, etwa zwei Shuttles, zur Verfügung stehen. D.h. die beiden Lagereinheiten können mit dieser Anordnung schnellstmöglich Be- und Entladen werden.

Es ist vorstellbar, dass die Bearbeitungseinheit und/oder die weitere Bearbeitungseinheit zusätzlich auch für das Beladen einer der weiteren Lagereinheit nachgeordneten Station der Fertigungsstraße, etwa eines Förderabschnittes der Fertigungsstraße, beispielsweise eines Kipptisches, angeordnet und ausgebildet ist.

In der zweiten Variante (b, c) kann die Bearbeitungseinheit in Objektförderrichtung gesehen direkt vor der Lagereinheit angeordnet sein, während die weitere Bearbeitungseinheit zwischen Lagereinheit und weiterer Lagereinheit angeordnet sein kann.

In einer weiteren Ausführungsvariante der Erfindung ist vorgesehen, dass
- zwischen der Lagereinheit und dem Beladesystem,
- und/oder zwischen der weiteren Lagereinheit und dem Beladesystem
ein Förderabschnitt der Fertigungsstraße ausgebildet ist, um die plattenförmigen Objekte von der Lagereinheit und/oder von der weiteren Lagereinheit zum Beladesystem zu transportieren, wobei der Förderabschnitt zumindest einen Zustelltisch zum geradlinigen Fördern in zumindest eine Richtung, etwa in Objektförderrichtung und/oder in eine quer, vorzugsweise normal, zur Objektförderrichtung verlaufende Richtung, und/oder zum Drehen plattenförmiger Objekte und/oder zumindest einen Kipptisch zum Überführen plattenförmiger Objekte aus einer Schräglage in eine horizontale Lage und umgekehrt umfasst.

Der Zustelltisch ist also ausgebildet, um die plattenförmigen Objekte der Auswahl gemäß der berechneten Beladungsanordnung korrekt einer dem Zustelltisch nachgeordneten Station der Fertigungsstraße, insbesondere auf oder in dem Beladesystem, positionieren zu können. Hierfür kann der Zustelltisch Fördermittel zum Fördern der Auswahl der plattenförmigen Objekte sowie eine Drehvorrichtung zum Drehen der Auswahl der plattenförmigen Objekte umfassen. D.h. der Zustelltisch ermöglicht ein zeitsparendes und präzises Orientieren und Positionieren der Auswahl der plattenförmigen Objekte unterschiedlichster Dimensionierungen.

Der Kipptisch ist wiederum ausgebildet, um die plattenförmigen Objekte der Auswahl aus einer Schräglage in eine horizontale Lage und umgekehrt zu überführen. Hierfür umfasst der Kipptisch zumindest ein Fördergestell, auf welchem zumindest ein plattenförmiges Objekt angeordnet werden kann, sowie einen Kippmechanismus, mit welchem Kippmechanismus das Fördergestell zwischen den beiden Lagen verschwenkbar ist. Dadurch lassen sich beispielsweise Objekte, die etwa in Schräglage (z.B. in Vertikallage) in der Lagereinheit eingelagert waren und aus dieser entnommen wurden, in eine im Wesentlichen horizontale Lage verbringen, in welcher horizontalen Lage die Objekte an das Beladesystem übergeben werden müssen. Somit lässt sich das erfindungsgemäße System besonders platzsparend ausbilden, da die Orientierung, in der die plattenförmigen Objekte eingelagert und transportiert werden müssen, praktisch frei - jedenfalls unabhängig von den Gegebenheiten des Beladesystems bzw. der Wärmebehandlungseinheit - wählbar ist.

Somit ist es vorstellbar dass sich die plattenförmigen Objekte der Auswahl bei Entnahme aus der Lagereinheit und/oder aus der weiteren Lagereinheit in Schräglage befinden und/oder in Schräglage von der Bearbeitungseinheit und/oder von der weiteren Bearbeitungseinheit auf den Kipptisch gefördert werden. Mittels des Kipptisches werden die entsprechenden Objekte dann in eine horizontale Lage überführt und mittels des Zustelltisches in horizontaler Lage ausgerichtet und an das Beladesystem übergeben.

In einer weiteren Ausführungsvariante der Erfindung ist vorgesehen, dass der Zustelltisch zwischen Lagereinheit und/oder weiterer Lagereinheit, und Beladesystem, vorzugsweise in Objektförderrichtung gesehen direkt vor dem Beladesystem, angeordnet ist. Dies stellt eine zeitsparende und präzise Anordnung der plattenförmigen Objekte der Auswahl auf oder in dem Beladesystem sicher. Wenn der Zustelltisch unmittelbar vor dem Beladesystem platziert ist, können die plattenförmigen Objekte der Auswahl direkt vor dem Beladesystem auf Basis der berechneten Beladungsanordnung orientiert und in, an oder auf das Beladesystem übergeben werden. Wenn zwischen dem Zustelltisch und dem Beladesystem zumindest eine andere Station des Fertigungsabschnitts der Fertigungsstraße angeordnet ist, können die plattenförmigen Objekte der Auswahl vor der zumindest einen anderen Station auf Basis der berechneten Beladungsanordnung ausgerichtet und positioniert und die ausgerichteten Objekte von der zumindest einen anderen Station, etwa einem Linearförderer, in, an oder auf das Beladesystem übergeben werden. Selbstverständlich können auch zwei oder mehrere Zustelltische Teil der Fertigungsstraße, insbesondere des Förderabschnitts, sein.

Um ein einfaches und zeitsparendes Überführen der plattenförmigen Objekte zwischen der Schräglage und der horizontalen Lage innerhalb des Förderabschnitts sicherzustellen, ist in einer weiteren Ausführungsvariante der Erfindung vorgesehen, dass der zumindest eine Kipptisch zwischen Lagereinheit und/oder weiterer Lagereinheit einerseits, und Beladesystem andererseits, vorzugsweise in Objektförderrichtung gesehen direkt hinter der Lagereinheit und/oder der weiteren Lagereinheit bzw. der Bearbeitungseinheit oder der weiteren Bearbeitungseinheit, angeordnet ist.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine Draufsicht auf eine schematische Darstellung eines Ausführungsbeispiels des erfindungsgemäßen Systems zur Beladung einer Wärmebehandlungseinheit;
- Fig. 2: eine schematische Draufsicht auf eine erste Beladungsanordnung;
- Fig. 3: eine schematische Draufsicht auf eine zweite Beladungsanordnung;
- Fig. 4: eine schematische Draufsicht auf eine dritte Beladungsanordnung;
- Fig. 5: eine schematische Draufsicht auf eine vierte Beladungsanordnung;
- Fig. 6: eine schematische Draufsicht auf eine fünfte Beladungsanordnung;
- Fig. 7: eine schematische Draufsicht auf eine sechste Beladungsanordnung;
- Fig. 8: eine schematische Draufsicht auf eine siebente Beladungsanordnung;
- Fig. 9: eine schematische Draufsicht auf eine achte Beladungsanordnung;
- Fig. 10: eine schematische Draufsicht auf eine neunte Beladungsanordnung;
- Fig. 11: eine schematische Draufsicht auf eine zehnte Beladungsanordnung.

### WEGE ZUR AUSFÜHRUNG DER ERFINDUNG

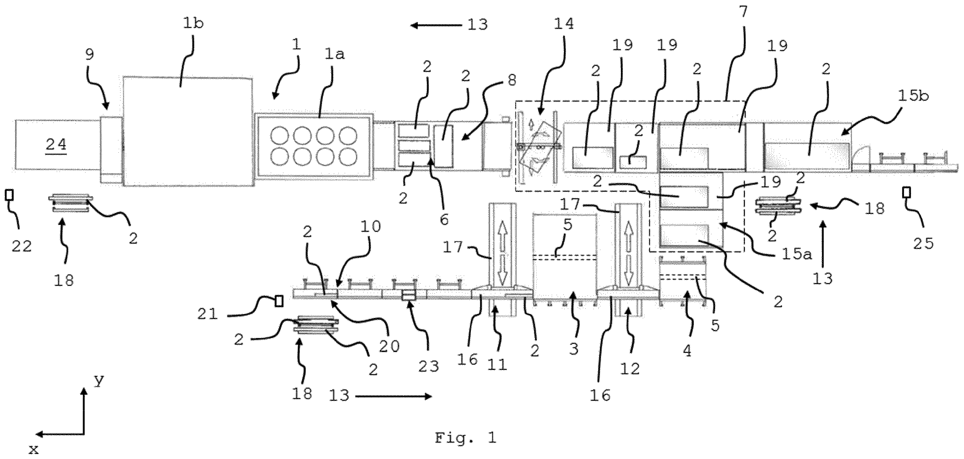

Fig 1. zeigt eine schematische Draufsicht auf ein Ausführungsbeispiel des erfindungsgemäßen Systems zur Beladung einer Wärmebehandlungseinheit 1. Das erfindungsgemäße System umfasst dabei neben einer nicht dargestellten Steuerungseinheit eine Erfassungseinheit 10, eine Bearbeitungseinheit 11, eine Lagereinheit 3, eine weitere Bearbeitungseinheit 12, eine weitere Lagereinheit 4, einen ersten Kipptisch 15a, einen zweiten Kipptisch 15b, mehrere Linearförderer 19, einen Zustelltisch 14 und ein Beladesystem 8, welche als Fertigungsstraße miteinander verbunden sind. Weiters umfasst die Fertigungsstraße noch die Wärmebehandlungseinheit 1, eine nachgeordnete Bearbeitungsstation 9 sowie ein Entladesystem 24. Ein Teil der Fertigungsstraße bildet einen Förderabschnitt 7 aus, der in diesem Ausführungsbeispiel, den ersten Kipptisch 15a, die Linearförderer 19 und den Zustelltisch 14 umfasst.

Die Erfassungseinheit 10 ist in einem Einlaufabschnitt der Fertigungsstraße angeordnet, welche Fertigungsstraße sich in diesem Ausführungsbeispiel von einer Aufgabeposition 20 des Einlaufabschnitts bis zu dem an die nachgeordnete Bearbeitungsstation 9 anschließenden und als Auslaufbett ausgebildeten Entladesystem 24 erstreckt. Mittels der Erfassungseinheit 10, die beispielsweise einen Barcode-Scanner umfassen oder durch einen solchen ausgebildet sein kann, werden in diesem Ausführungsbeispiel für sämtliche von einem Fächerwagen 18 entnommene plattenförmige Objekte 2, bei welchen es sich in diesem Ausführungsbeispiel um Glasplatten handelt, zwei Parameter, nämlich die Länge und die Breite des jeweiligen plattenförmigen Objektes 2, erfasst. Selbstverständlich kann es auch ausreichend sein, lediglich zumindest einen Parameter einzelner plattenförmiger Objekte 2 zu erfassen, oder können noch weitere Daten, die beispielsweise auf einem als Klebeetikett mit Barcode ausgebildeten Informationsträger hinterlegt sind, erfasst werden. Alternativ kann die Erfassungseinheit 10 auch ein Vermessungssystem, beispielsweise einen Scanner oder eine Kamera mit entsprechender Bildbearbeitungs-Software, umfassen, um die plattenförmigen Objekte 2 hinsichtlich ihrer zu erfassenden Parameter zu analysieren. Ebenso ist es denkbar, dass die plattenförmigen Objekte 2 manuell vermessen und die jeweiligen Parameter manuell, beispielsweise mittels eines im Bereich des Einlaufabschnitts angeordneten Terminals 21, eingegeben werden.

Dabei kann der Fächerwagen 18, von dem die Glasplatten entnommen und stehend - also in vertikaler Ausrichtung - in der Aufgabeposition 20 des Einlaufabschnitts in diesen eingestellt werden, alternativ auch als A- oder L-Glasgestell bzw. als manuelles Glasgestell ausgebildet sein.

Nach dem Erfassen der beiden Parameter wird das jeweilige plattenförmige Objekt 2 entlang des Einlaufabschnittes in stehender Positionierung von der Aufgabeposition 20 zu einer ebenfalls im Einlaufabschnitt angeordneten Kontrolleinheit 23 gefördert, um dort hinsichtlich der erfassten Parameter überprüft zu werden. Im konkreten Fall werden mittels der Kontrolleinheit 23 die Länge und die Breite des plattenförmigen Objektes 2 vermessen und mit den zuvor erfassten Parametern des plattenförmigen Objektes 2 verglichen. Stimmen die erfassten mit den kontrollierten Parametern überein, wird das jeweilige plattenförmige Objekt 2 zur weiteren Verarbeitung freigegeben; bei Unstimmigkeiten muss eine (manuelle) Korrektur der zuvor erfassten Parameter vorgenommen werden. Über das im Bereich des Einlaufabschnitts angeordnete Terminal 21 können die erfassten und ggf. korrigierten Parameter bzw. Daten des jeweiligen plattenförmigen Objekts 2 an ein weiteres Terminal 22 übergeben werden, dessen Funktion weiter unten näher beschreiben wird.

Anschließend wird das jeweilige plattenförmige Objekt 2 mittels der Bearbeitungseinheit 11 aus dem Einlaufabschnitt entnommen und an einem Einlagerungsort 5 der Lagereinheit 3 eingelagert. Die Lagereinheit 3 ist in diesem Ausführungsbeispiel als Fächerregal (harp car) ausgebildet und umfasst mehrere vertikal und hintereinander angeordnete Fächer, wobei jedes Fach einen Einlagerungsort 5 ausbildet. Alternativ könnte jedes Fach mehrere nebeneinander angeordnete Einlagerungsorte 5 ausbilden.

Die Bearbeitungseinheit 11 weist eine Shuttle-Einheit 16 auf, die auf zumindest entlang der Lagereinheit 3 verlaufenden Schienen 17 verfahrbar ist. Mittels der Shuttle-Einheit 16 kann in diesem Ausführungsbeispiel jeweils ein plattenförmiges Objekt 2 aus dem Einlaufabschnitt entnommen werden und aufgrund der Verfahrbarkeit der Shuttle-Einheit 16 längs der Schienen 17 in jeden Einlagerungsort 5 der Lagereinheit 3 eingeschoben werden. Die Wahl des jeweiligen Einlagerungsortes 5 kann dabei willkürlich sein, etwa durch Abfrage eines Füllstatus ("leer" oder "voll") für jeden Einlagerungsort 5, den die Shuttle-Einheit 16 passiert, und Wählen des ersten Einlagerungsortes 5, dessen Füllstatus "leer" ist; alternativ kann die Steuerungseinheit auch einen bestimmten Einlagerungsort 5 vorgeben, etwa auf Basis der erfassten Parameter.

Nach dem Einlagern werden Informationen zum Einlagerungsort 5 der jeweiligen plattenförmigen Objekte 2 und zu den entsprechend erfassten Parametern auf einem Datenträger (nicht dargestellt) abgespeichert. Auf Basis der abgespeicherten Informationen sowie unter Berücksichtigung einer vorgebbaren Hauptbedingung, bei welcher es sich in diesem Ausführungsbeispiel um die Maximierung der Packungsdichte des als Beladetisch (auch als Härte- oder Beladebett bezeichnet) ausgebildeten Beladesystems 8 handelt, sowie einer Randbedingung, bei welcher es sich in diesem Fall um die Vorgabe handelt, dass nur plattenförmige Objekte 2 mit einem bestimmten Längen-Breiten-Verhältnis gemeinsam wärmebehandelt werden sollen, wird mittels einer Steuerungseinheit (nicht dargestellt) bzw. mittels einer auf der Steuerungseinheit ausgeführten Software eine Beladungsanordnung 6 berechnet, in welcher Beladungsanordnung 6 plattenförmige Objekte 2 der Auswahl auf einer Beladefläche des Beladetisches angeordnet bzw. verschachtelt werden sollen. Die Steuerungseinheit ist in diesem Ausführungsbeispiel räumlich getrennt von der Fertigungsstraße angeordnet und auch dazu ausgebildet, die einzelnen Komponenten des erfindungsgemäßen Systems zu steuern, insbesondere die Erfassungseinheit 10, die Bearbeitungseinheiten 11, die weitere Bearbeitungseinheit 12, der erste Kipptisch 15a, der zweite Kipptisch 15b, die Linearförderer 19, den Zustelltisch 14 und/oder das Beladesystem 8.

Nach der Berechnung der Beladungsanordnung 6 erfolgt ein Vorsortieren der in der Lagereinheit 4 befindlichen plattenförmigen Objekte 2 auf Basis einer der berechneten Beladungsanordnung 6 entsprechenden Beladereihenfolge, in welcher Beladereihenfolge die Objekte 2 der Auswahl an das Beladesystem 8 übergeben werden sollen, um die Beladungsanordnung 6 herzustellen. Hierfür werden die plattenförmigen Objekte 2 der Auswahl mittels der weiteren Bearbeitungseinheit 12 - die prinzipiell denselben Aufbau aufweist wie die Bearbeitungseinheit 11, jedoch mit dem Unterschied, dass die Schienen 17 der weiteren Bearbeitungseinheit 12 entlang der weiteren Lagereinheit 4 und entlang des Kipptisches 15a verlaufen - aus den jeweiligen vertikal angeordneten Einlagerungsorten 5 der Lagereinheit 3 entnommen und mittels der weiteren Bearbeitungseinheit 11 in direkt nebeneinanderliegende, ebenfalls vertikal angeordnete Einlagerungsorte 5 der weiteren Lagereinheit 3 in Beladereihenfolge eingelagert, sodass die Entnahme sämtlicher plattenförmiger Objekte 2 der Auswahl aus der weiteren Lagereinheit 4 besonders rasch erfolgen kann.

Aus der weiteren Lagereinheit 4 werden die plattenförmigen Objekte 2 der Auswahl mittels der weiteren Bearbeitungseinheit 12 - in diesem Ausführungsbeispiel - in Beladereihenfolge entnommen und an den Förderabschnitt 7 übergeben.

Alternativ kann die Vorsortierung auch in einer Veränderung von Einlagerungsorten 5 solcher plattenförmiger Objekte 2, die zur Auswahl gehören, und/oder solcher plattenförmiger Objekte 2, die nicht zur Auswahl gehören, bestehen, sodass die plattenförmigen Objekte 2 der Auswahl nach dem Vorsortierungsvorgang in besonders zeitsparend zu erreichenden Einlagerungsorten 5 der Lagereinheit 3 und/oder der weiteren Lagereinheit 4 eingelagert sind.

Die Steuerung der Bearbeitungseinheit 11 und der weiteren Bearbeitungseinheit 12 während des Vorsortierens kann mittels der genannten Software, oder mittels einer anderen, ebenfalls auf der Steuerungseinheit ausgeführten Software und/oder mittels der Steuerungseinheit erfolgen. Selbiges gilt für die Entnahme der plattenförmigen Objekte 2.

Mittels des ersten Kipptisches 15a werden die plattenförmigen Objekte 2 von der vertikalen Lage in eine horizontale Lage, in welcher die plattenförmigen Objekte 2 auf oder in dem Beladesystem 6 angeordnet werden sollen, gebracht. Mittels der Linearförderer 19, die in diesem Ausführungsbeispiel die plattenförmigen Objekte 2 in horizontaler Lage entweder nur in eine x-Richtung oder nur in eine y-Richtung oder in x-y-Richtung fördern können, werden die plattenförmigen Objekte 2 der Auswahl zum Zustelltisch 14 gefördert und an diesen übergeben.

Der Zustelltisch 14 ist ausgebildet, um die plattenförmigen Objekte 2 der Auswahl gemäß der berechneten Beladungsanordnung 6 in geeigneter Orientierung und Positionierung an das Beladesystem 8 zu übergeben, sodass die Beladungsanordnung 6 auf der Beladefläche des Beladetisches hergestellt werden kann. Hierfür umfasst der Zustelltisch 14 Fördermittel zum geradlinigen Fördern plattenförmiger Objekte 2 sowie eine Drehvorrichtung zum Drehen plattenförmiger Objekte 2. Der Zustelltisch 14 kann somit folgende Funktionen erfüllen:
a) plattenförmige Objekte 2 (Glasplatten) linear in Objektförderrichtung 13 transportieren
b) plattenförmige Objekte 2 (Glasplatten) linear in Objektförderrichtung 13 transportieren und gleichzeitig um einen beliebigen Winkel drehen
c) plattenförmige Objekte 2 (Glasplatten) linear in Objektförderrichtung 13 und gleichzeitig in eine quer, vorzugsweise normal, zur Objektförderrichtung 13 verlaufende Richtung transportieren
d) plattenförmige Objekte 2 (Glasplatten) linear in Objektförderrichtung 13 und gleichzeitig in eine quer, vorzugsweise normal, zur Objektförderrichtung 13 verlaufende Richtung transportieren und dabei gleichzeitig auch um einen beliebigen Winkel drehen
e) bei plattenförmigen Objekten 2 (Glasplatten), die länger sind als der Zustelltisch 14 (in Objektförderrichtung 13 gesehen), kann der Zustelltisch 14 in jede beliebige, parallele Position zur Objektförderrichtung 13 in 90° positioniert werden.

Somit ist der Zustelltisch 14 in der Lage, jedes plattenförmige Objekt 2, das von dem Linearförderer 19 an ihn übergeben wird, anzunehmen und seine Positionierung und/oder Orientierung relativ zum Beladesystem 8 im Zuge der Übergabe an das Beladesystem 8 noch zu verändern. Vom Zustelltisch 14 werden die plattenförmigen Objekte 2 der Auswahl somit in Beladereihenfolge und in bereits "richtiger" Positionierung - nämlich entlang der dem Zustelltisch 14 zuweisenden Seite des Beladesystems 8 - und in "richtiger" Orientierung an das Beladesystem 8 übergeben. Durch Positionierung der plattenförmigen Objekte 2 der Auswahl auf der Beladefläche wird die Beladungsanordnung 6 auf Basis der Berechnung der Steuerungseinheit hergestellt.

Sobald die Beladungsanordnung 6 hergestellt ist - d.h. dass sämtliche der plattenförmigen Objekte 2 der Auswahl gemäß der Berechnung der Steuerungseinheit auf der Beladefläche des Beladesystems 8 positioniert sind -, wird die gesamte Auswahl der plattenförmigen Objekte 2 in der bzw. unter Beibehaltung der Beladungsanordnung 6, also das gesamte Härtebett, in die Wärmebehandlungseinheit 1 befördert, welche Wärmebehandlungseinheit 1 hier durch einen Härteofen 1a und eine Quencheinheit 1b (mit anschließender Kühleinheit) ausgebildet ist.

Nach dem Befördern der Beladungsanordnung 6 in die Wärmebehandlungseinheit 1, wird eine weitere Beladungsanordnung (nicht dargestellt) auf der Beladefläche des Beladesystems 8 positioniert und anschließend in die Wärmebehandlungseinheit 1 befördert, wodurch eine kontinuierliche Beschickung der Wärmebehandlungseinheit 1 sichergestellt ist. Daraus ergibt sich, dass in diesem Ausführungsbeispiel mehrere Schritte des zuvor beschriebenen Verfahrens für unterschiedliche plattenförmige Objekte 2 einer Auswahl zeitgleich durchgeführt werden. Beispielsweise kann die zuvor beschriebene Entladung eines Objekts 2 der Auswahl aus der weiteren Lagereinheit 4 und der Transport zumindest eines anderen Objekts 2 der Auswahl zum Zustelltisch 14 zeitgleich erfolgen. Außerdem können mehrere Schritte des Verfahrens für Objekte 2 unterschiedlicher Auswahlen zeitgleich ausgeführt werden, beispielsweise kann die Einlagerung eines Objekts 2 einer Auswahl in die Lagereinheit 3 zeitgleich mit dem Entnehmen eines Objekts 2 einer anderen Auswahl aus der weiteren Lagereinheit 4 erfolgen.

Durch das in Fig. 1 dargestellte erfindungsgemäße System, welches dazu ausgebildet ist, das oben beschriebene Verfahren durchzuführen, kann der Durchsatz durch die Wärmebehandlungseinheit 1, bei welchem Durchsatz es sich um die Anzahl der in einer bestimmten Zeiteinheit die Wärmebehandlungseinheit 1 durchlaufenden plattenförmigen Objekte 2 handelt, deutlich erhöht werden. D.h. - verglichen mit dem Stand der Technik - können pro Zeiteinheit mehr plattenförmige Objekte 2 wärmebehandelt werden. Dies ist insbesondere auf den Umstand zurückzuführen, dass die plattenförmigen Objekte 2 der Auswahl in der "richtigen" Reihenfolge, also in der Beladereihenfolge, und in besonders zeitsparender Art und Weise an das Beladesystem 8 übergeben werden können, da die Beladungsanordnung 6 für die gesamte Auswahl plattenförmiger Objekte 2 im Vorfeld der Beladung berechnet und die plattenförmigen Objekte 2 aus der Lagereinheit 3 und/oder aus der weiteren Lagereinheit 4 im Wesentlichen in beliebiger Reihenfolge zugänglich sind.

Nachdem die Auswahl der plattenförmigen Objekte 2 die Wärmebehandlungseinheit 1 verlassen hat, durchläuft die Auswahl eine nachgeordnete Bearbeitungsstation 9, in welcher die plattenförmigen Objekte 2 der Auswahl gescannt werden. Dadurch kann überprüft werden, ob die plattenförmigen Objekte 2 der jeweiligen Auswahl auch nach dem Durchlaufen der Wärmebehandlungseinheit 1 noch immer in der Beladungsanordnung 6 angeordnet sind bzw. ob im Zuge der Wärmebehandlung Schäden an einzelnen plattenförmigen Objekten 2 aufgetreten sind. Außerdem kann ein Abgleich der durch die nachgeordnete Bearbeitungsstation 9 gescannten tatsächlichen Beladungsanordnung 6 mit der berechneten Beladungsanordnung 6 erfolgen und kann eine Zuordnung der anfangs erfassten Parameter bzw. Informationen zu dem jeweiligen plattenförmigen Objekt 2 der Auswahl vorgenommen werden. Dieser Abgleich bzw. diese Zuordnung kann auch, beispielsweise auf einem im Bereich der nachgeordneten Bearbeitungsstation 9 angeordneten Bildschirm, graphisch dargestellt werden. Sobald die Auswahl auf ein an die nachgeordnete Bearbeitungsstation 9 anschließendes Entladesystem 24 (Auslaufbett) weitergefördert wurde, können die plattenförmigen Objekte 2 der Auswahl mit Etiketten oder ähnlichem versehen werden, um die wärmebehandelten Objekte 2 wieder mit Informationen zu ihren anfangs erfassten Parametern auszustatten; auf diese Weise geht die Identität eines plattenförmigen Objektes 2 des Objektstromes im Zuge der Wärmebehandlung (und etwaiger Nachbearbeitungsschritte) nicht verloren.

Um das Aufbringen der Etiketten auf die plattenförmigen Objekte 2 zu erleichtern, kann es vorgesehen sein, dass die anfangs mittels der Erfassungseinheit 10 erfassten Daten (Parameter), beispielsweise mittels eines im Bereich der Erfassungseinheit 10 angeordneten Terminals 21, an ein im Bereich des Entladesystems 24 angeordnetes weiteres Terminal 22 übergeben werden. Gemeinsam mit der berechneten und/oder der tatsächlichen Beladungsanordnung 6, in der die plattenförmigen Objekte 2 der Auswahl auf dem Entladesystem 24 angeordnet sind, können die übergebenen Daten (Parameter) auf geeigneten Informationsträgern, etwa Klebeetiketten, angeordnet oder kodiert werden und können diese Informationsträger mittels des Terminals 22 ausgedruckt und auf die plattenförmigen Objekte 2 aufgebracht werden. Diese Aufbringung kann manuell oder automatisiert erfolgen.

Zusammenfassend lässt sich also festhalten, dass die Aufgabeposition 20, die Erfassungseinheit 10, die Kontrolleinheit 23, die Bearbeitungseinheit 11, die Lagereinheit 3, die weitere Bearbeitungseinheit 12, die weitere Lagereinheit 4, der erste Kipptisch 15a, die mehreren Linearförderer 19, der Zustelltisch 14, das Beladesystem 8, die Wärmebehandlungseinheit 1, die nachgeordnete Bearbeitungsstation 9 und das Entladesystem 24 in einer Objektförderrichtung 13, in welcher die hier als Glasplatten ausgebildeten plattenförmigen Objekte 2 die Fertigungsstraße durchlaufen, hintereinander angeordnet sind. Die Erfassungseinheit 10 kann jedoch in Objektförderrichtung 13 gesehen auch vor der Aufgabeposition 20 angeordnet sein, insbesondere wenn diese als mobile Einheit - etwa als Handscanner oder Barcodescanner - ausgebildet ist.

Um weitere plattenförmige Objekte 2, die beispielsweise aufgrund ihrer Dimensionen nicht in der Lagereinheit 3 und/oder in der weiteren Lagereinheit 4 eingelagert werden können, dem Förderabschnitt 7 bzw. der Wärmebehandlungseinheit 1 zuführen zu können, umfasst das erfindungsgemäße System in diesem Ausführungsbeispiel auch einen Zulaufabschnitt, welcher Zulaufabschnitt mit einem der Linearförderer 19 des Förderabschnitts 7 verbunden ist. Dieser Zulaufabschnitt der Fertigungsstraße kann im Wesentlichen analog zu dem Einlaufabschnitt ausgebildet sein und darüber hinaus den zweiten Kipptisch 15b umfassen, um die weiteren plattenförmigen Objekte 2 aus einer Schräglage, in der sie etwa aus einem weiteren Fächerwagen 18 entnommen werden, in die horizontale Lage zu überführen und dem Linearförderer 19 des Förderabschnitts zu übergeben. Außerdem kann der Zulaufabschnitt eine weitere Erfassungseinheit 25 aufweisen, um Parameter der weiteren plattenförmigen Objekte 2 zu erfassen und diese an das weitere Terminal 22 zu übermitteln. Auch eine weitere Kontrolleinheit (nicht dargestellt) zur Überprüfung der weiteren plattenförmigen Objekte 2 hinsichtlich der erfassten Parameter kann im Zulaufabschnitt vorgesehen sein.

Nach der Aufbringung der Informationsträger bzw. Etiketten auf die wärmebehandelten plattenförmigen Objekte 2 der Auswahl können diese vom Entladesystem 24 entnommen und mittels eines weiteren Förderwagens 18 abtransportiert werden. Alternativ ist es aber auch denkbar, dass sich der vorstehend beschriebene Aufbau der Fertigungsstraße zwischen Einlaufabschnitt und Beladesystem 8 im Anschluss an das Entladesystem 24 in umgekehrter Abfolge wiederholt. Beispielsweise kann an das Entladesystem 24 ein Förderabschnitt anschließen, mittels dem die plattenförmigen Objekte 2 der Auswahl in Richtung einer oder mehrerer Lagereinheiten transportiert werden können, um darin eingelagert und/oder sortiert werden zu können. Anschließend können die in diesen Lagereinheiten gelagerten plattenförmigen Objekte 2, beispielsweise entsprechend ihrer Chargennummern, über einen Auslaufabschnitt abtransportiert und in entsprechende Regalanordnungen oder Förderwägen eingeschlichtet werden.

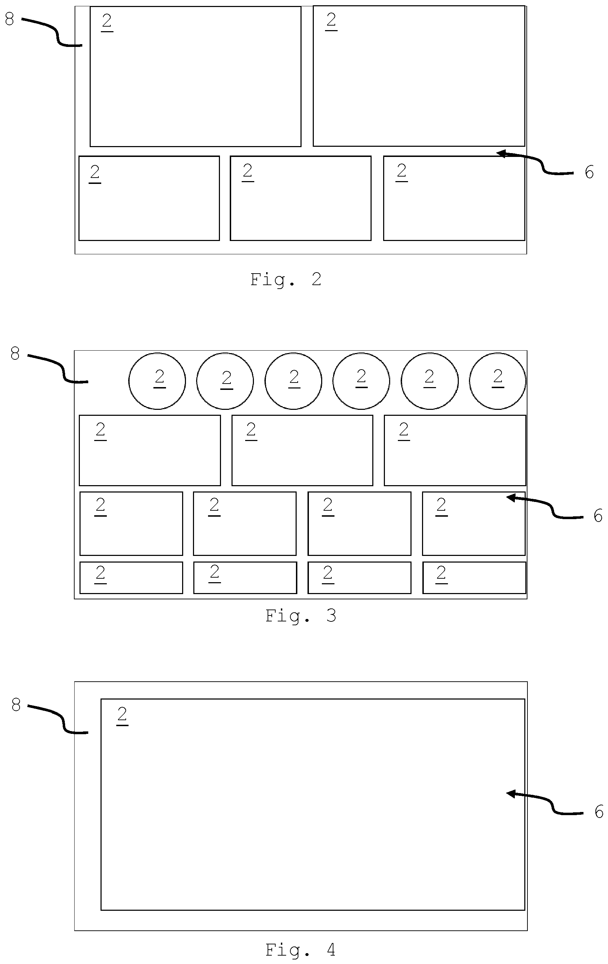

In den Fig. 2 bis 4 sind unterschiedliche Beladungsanordnungen 6 auf der Beladefläche des als Beladetisch ausgeführten Beladesystems 8 dargestellt.

Fig. 2 zeigt eine Beladungsanordnung 6, die eine Auswahl fünf plattenförmiger Objekte 2 mit jeweils einer rechteckigen Deckfläche umfasst, wobei zwei plattenförmige Objekte 2 jeweils die gleiche Länge und Breite aufweisen und die restlichen drei plattenförmigen Objekte 2 ebenfalls jeweils die gleiche Länge und Breite aufweisen.

Alle fünf plattenförmigen Objekte 2 der Auswahl besitzen die gleiche Dicke.

Fig. 3 stellt eine Beladungsanordnung 6 umfassend eine Auswahl 17 plattenförmiger Objekte 2 dar. Von dieser Auswahl weisen sechs plattenförmige Objekte 2 jeweils eine runde Deckfläche mit gleichem Durchmesser auf, während die restlichen Objekte 2 eine rechteckige Deckfläche besitzen. Auch hier weisen alle plattenförmigen Objekte 2 der Auswahl die gleiche Dicke auf, wobei die Dicke der in Fig. 3 dargestellten plattenförmigen Objekte 2 unterschiedlich zu der Dicke der in Fig. 2 dargestellten plattenförmigen Objekte 2 ist.

In Fig. 4 ist eine Beladungsanordnung 6 umfassend eine Auswahl mit nur einem einzigen plattenförmigen Objekt 2 zu sehen.

Beispielsweise kann es sich bei den in Fig. 2 und 3 dargestellten plattenförmigen Objekten 2 um sämtliche Glasplatten eines Objektstromes handeln, und bei dem in Fig. 4 dargestellten Objekt 2 um eine über den zweiten Kipptisch 15b zugeführte Glasplatte mit Übergröße.

Erfindungsgemäß können nun aus der Gesamtmenge der in Fig. 2 und 3 gezeigten Glasplatten, die in der Lagereinheit 3 und/oder der weiteren Lagereinheit 4 eingelagert sind, zwei Beladungsanordnungen 6 berechnet werden, nämlich die erste Beladungsanordnung 6, die in Fig. 2 dargestellt ist, und die zweite Beladungsanordnung 6, die in Fig. 3 dargestellt ist, wobei sowohl die Auswahl der jeweiligen Glasplatten, die ja anhand der abgespeicherten Informationen eindeutig identifizierbar sind, als auch deren Anordnung auf dem als Beladetisch ausgebildeten Beladesystem 8 durch numerische Lösung eines Optimierungsproblems berechnet werden können, bei welchem Optimierungsproblem die Minimierung einer auf dem Beladetisch vorhandenen Leerfläche als Hauptbedingung berücksichtigt wird und die Bestückung mit Glasplatten identischer Dicke als Nebenbedingungen einfließen.

Hierzu kann das jeweilige Optimierungsproblem beispielsweise durch computergestützte Berechnung sämtlicher Permutationen der in den Lagereinheiten 3 und 4 eingelagerten Glasplatten und Auswahl derjenigen Permutation gelöst werden, welche Permutation die Hauptbedingung - also die Minimierung der Leerfläche der Beladefläche bei gegebener Größe der Beladefläche - am besten erfüllt. Alternativ kann das Optimierungsproblem auch durch an sich bekannte numerische Verfahren, etwa Bergsteigeralgorithmus, BFGS-Verfahren, Branch-and-Bound, Schnittebenenverfahren, Branch-and-Cut, Pivotverfahren, Simplex-Verfahren, Downhill-Simplex-Verfahren, Innere-Punkte-Verfahren, Logarithmisches Barriereverfahren, oder Simulierte Abkühlung (Simulated Annealing), gelöst werden.

Zur Berechnung der Beladungsanordnung 6 kann eine Software verwendet werden, welche Informationen zu den eingegebenen oder eingescannten Parametern der Glasplatten und/oder zu den jeweiligen Einlagerungsorten 5 verwendet. Diese Software kann mögliche Szenarien zur Belegung des Härtebettes aus allen vorrätig gehaltenen Glasscheiben berechnen und aus den vorberechneten Möglichkeiten zu jedem Zeitpunkt die bestmögliche Kombination auswählen.
- Als Ausgangspunkt können die Glasscheiben automatisiert und/oder manuell vermessen (Länge, Breite, Höhe), die korrekte Orientierung einer etwaigen Beschichtungsseite der Glasscheiben kontrolliert und in ein chaotisches Lagersystem eingelagert werden.
- Der verwendete Algorithmus kennt durch die Vermessung und Ansteuerung des Lagerungssystems (umfassend die beiden Lagereinheiten 3 und 4) die exakte Position jeder vorrätigen Glasscheibe (also deren Einlagerungsort 5).
- Die Vorausberechnung erfolgt mit Hilfe der digitalen Zwillinge für jede der eingelagerten Glasscheiben, sprich: auf Basis der Informationen zum jeweiligen Einlagerungsort 5 und/oder zum jeweiligen zumindest einen erfassten Parameter. Der digitale Zwilling repräsentiert eine Glasscheibe in der Software. Jede Glasscheibe hat auf ihrem digitalen Zwilling die entsprechenden Parameter gespeichert; sprich: jede Glasscheibe wird bei der Berechnung der Beladungsanordnung durch ihren digitalen Zwilling repräsentiert.
- Zur optimierten Belegung des Härtebettes wird eine maschinelle Simulation ausgeführt. Die Simulation berechnet eine chronologische Abfolge der Kombination der vorrätigen

Glasscheiben, um die Beladung der Härteanlage konstant am Maximum betreiben zu können.
- Der Algorithmus liefert die exakte Reihenfolge, in der die Glasscheiben in die Härteanlage geladen werden müssen (Beladereihenfolge). Weiters wird auch die Drehrichtung und die Position jeder Scheibe (also deren Positionierung und Orientierung) am Härtebett vorberechnet.
- Aufgrund der berechneten Belegung am Härtebett (Beladungsanordnung 6), wird in Abhängigkeit von Größen und Art der Beschichtung das passende Produktionsprogramm (Durchlaufzeit bzw. -geschwindigkeit durch die Wärmebehandlungseinheit 1, Temperatur, etc.) an der Härteanlage bzw. der Wärmebehandlungseinheit 1 automatisch voreingestellt. Durch die Vorwahl des Produktionsprogrammes wird die Produktionsqualität erhöht und Fehlbedienungen vermieden.
- Durch den hohen Grad der Automatisierung und Digitalisierung werden Bedienfehler durch den Operator der Anlage weitgehend vermieden und eine End-to-End Traceability mit allen notwendigen Prozess- und Maschinendaten für jede Glasscheibe in der Produktion gewährleistet.

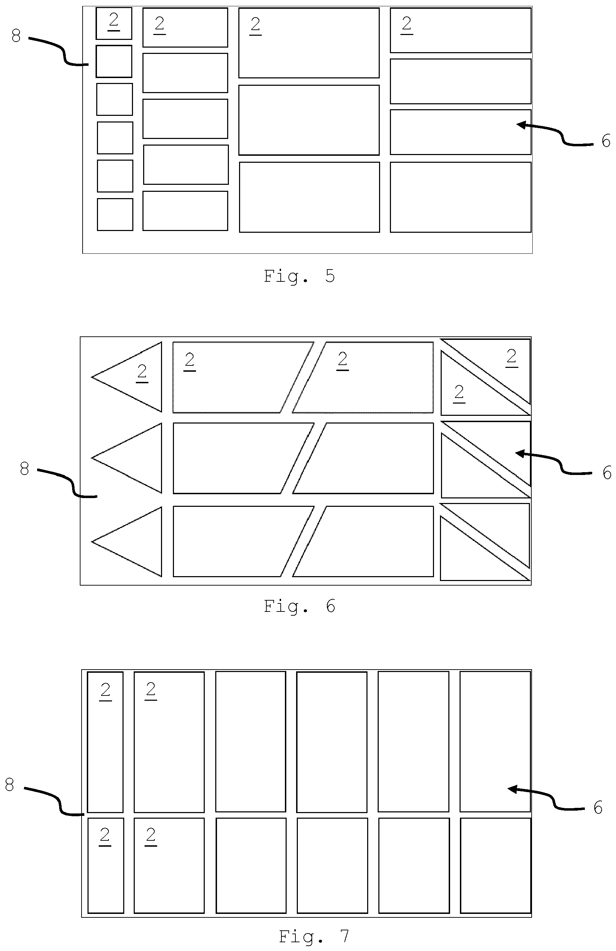

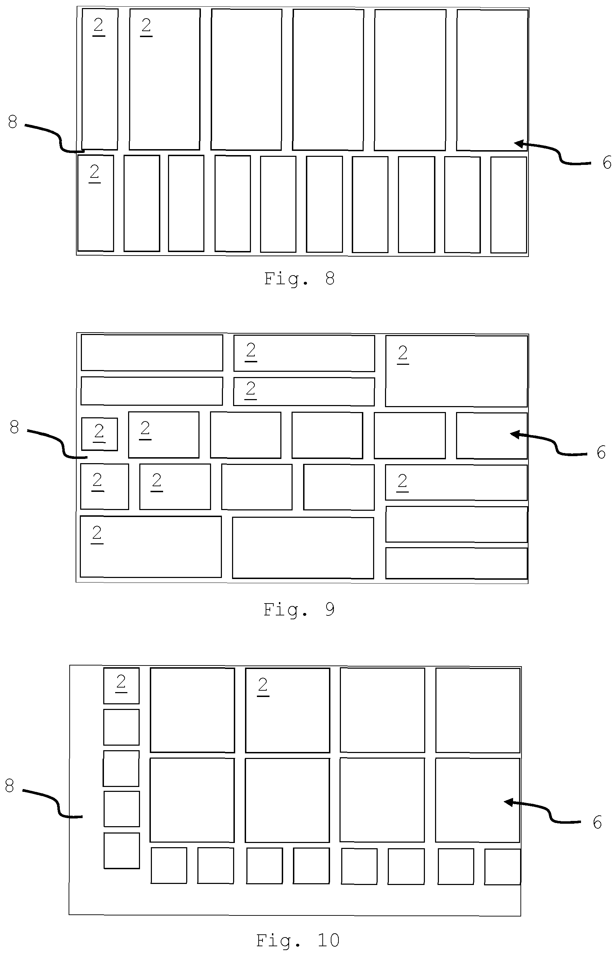

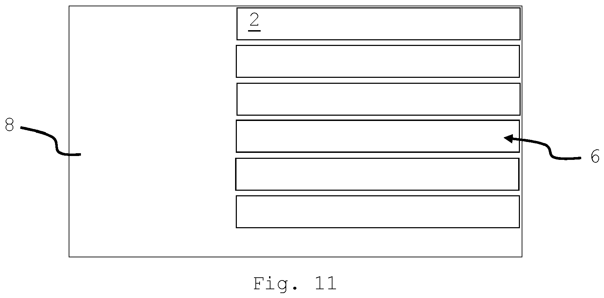

Weitere Beispiele möglicher Beladungsanordnungen 6 sind in den Figuren 5 bis 11 dargestellt.

### BEZUGSZEICHENLISTE

- 1: Wärmebehandlungseinheit
1a Härteofen
1b Quencheinheit
- 2: plattenförmige Objekte
- 3: Lagereinheit
- 4: weitere Lagereinheit
- 5: Einlagerungsort
- 6: Beladungsanordnung
- 7: Förderabschnitt
- 8: Beladesystem
- 9: nachgeordnete Bearbeitungsstation
- 10: Erfassungseinheit
- 11: Bearbeitungseinheit
- 12: weitere Bearbeitungseinheit
- 13: Objektförderrichtung
- 14: Zustelltisch
15a erster Kipptisch
15b zweiter Kipptisch

- 16: Shuttle-Einheit
- 17: Schienen
- 18: Regalanordnung
- 19: Linearförderer
- 20: Aufgabeposition
- 21: Terminal
- 22: weiteres Terminal
- 23: Kontrolleinheit
- 24: Entladesystem
- 25: weitere Erfassungseinheit

## Patentansprüche

1. Verfahren zum Beladen einer Wärmebehandlungseinheit (1) mit plattenförmigen Objekten (2), insbesondere Glasplatten, wobei das Verfahren die folgenden Schritte umfasst:
a) Erfassen von jeweils zumindest einem Parameter von plattenförmigen Objekten (2) eines Objektstroms, wobei eine Länge, eine Breite, eine Dicke, ein Durchmesser, eine Beschichtungsart, eine Materialart und/oder eine Chargennummer als Parameter des jeweiligen plattenförmigen Objekts (2) erfasst wird bzw. werden;
b) Einlagern der plattenförmigen Objekte (2) in einer Lagereinheit (3) mit mehreren Einlagerungsorten (5);
c) Abspeichern von Informationen zum jeweiligen Einlagerungsort (5) und/oder zum jeweiligen zumindest einen erfassten Parameter der jeweiligen plattenförmigen Objekte (2);
d) Berechnen einer Beladungsanordnung (6) einer Auswahl der plattenförmigen Objekte (2) für die Anordnung der plattenförmigen Objekte (2) dieser Auswahl auf oder in einem Beladesystem (8), wobei die Berechnung auf Basis der abgespeicherten Informationen sowie unter Berücksichtigung vorgebbarer Hauptbedingungen erfolgt;
e) Entnehmen der Auswahl der plattenförmigen Objekte (2) vom jeweiligen Einlagerungsort (5);
f) Transportieren der Auswahl der plattenförmigen Objekte (2) zum Beladesystem (8);
g) Übergeben der Auswahl der plattenförmigen Objekte (2) an das Beladesystem (8) in einer der berechneten Beladungsanordnung (6) entsprechenden Beladereihenfolge;
h) Positionieren der Auswahl der plattenförmigen Objekte (2) auf oder in dem Beladesystem (8), wodurch die Beladungsanordnung (6) hergestellt wird;
i) Befördern der sich in Beladungsanordnung (6) befindlichen Auswahl der plattenförmigen Objekte (2) vom Beladesystem (8) in die Wärmebehandlungseinheit (1).

2. Verfahren nach Anspruch 1, **dadurch gekennzeichnet, dass** basierend auf der Beladungsanordnung (6) vor dem Schritt e) durch Veränderung des Einlagerungsortes (5) eines oder mehrerer der plattenförmigen Objekte (2) eine Vorsortierung erfolgt.

3. Verfahren nach einem der Ansprüche 1 bis 2, **dadurch gekennzeichnet, dass** basierend auf der entsprechenden Beladungsanordnung (6) vor dem Schritt e) durch Entnehmen eines oder mehrerer der plattenförmigen Objekte (2) aus der Lagereinheit (3) und Einlagern in einer weiteren Lagereinheit (4) mit mehreren Einlagerungsorten (5) eine Vorsortierung erfolgt.

4. Verfahren nach einem der Ansprüche 1 bis 3, **dadurch gekennzeichnet, dass** nach dem Befördern der Beladungsanordnung (6) in die Wärmebehandlungseinheit (1) eine weitere Auswahl der plattenförmigen Objekte (2) auf oder in dem Beladesystem (8) positioniert wird, um eine weitere Beladungsanordnung (9) herzustellen.

5. Verfahren nach einem der Ansprüche 1 bis 4, **dadurch gekennzeichnet, dass** die plattenförmigen Objekte (2) nach dem Erfassen des zumindest einen Parameters und vor dem Einlagern hinsichtlich einzelner oder sämtlicher der erfassten Parameter überprüft werden.

6. Verfahren nach einem der Ansprüche 1 bis 5, **dadurch gekennzeichnet, dass** es sich bei den Hauptbedingungen um eine Maximierung einer Packungsdichte des Beladesystems (8) und/oder um eine Minimierung der Beladezeit des Beladesystems (8) handelt, wobei vorzugsweise bei der Berechnung der Beladungsanordnung außerdem Neben- oder Randbedingungen berücksichtigt werden.

7. Verfahren nach einem der Ansprüche 1 bis 6, **dadurch gekennzeichnet, dass** zwei oder mehrere der Schritte e), f), g) und h) für unterschiedliche plattenförmige Objekte (2) der Auswahl zeitgleich durchgeführt werden.

8. Verfahren nach einem der Ansprüche 1 bis 7, **dadurch gekennzeichnet, dass** die abgespeicherten Informationen plattenförmiger Objekte (2) und/oder die Beladungsanordnung (6) einer Auswahl an eine der Wärmebehandlungseinheit (1) nachgeordnete Bearbeitungsstation (9) übergeben werden.

9. System zum Beladen einer Wärmebehandlungseinheit (1) mit plattenförmigen Objekten (2), insbesondere Glasplatten, umfassend
- eine Erfassungseinheit (10) zum Erfassen von jeweils zumindest einem Parameter von plattenförmigen Objekten (2) eines Objektstroms, wobei die Erfassungseinheit (10) als Parameter des jeweiligen plattenförmigen Objekts (2) eine Länge, eine Breite, eine Dicke, einen Durchmesser, eine Beschichtungsart, eine Materialart und/oder eine Chargennummer erfasst,
- zumindest eine Lagereinheit (3) umfassend mehrere Einlagerungsorte (5) zur Aufnahme der plattenförmigen Objekte (2),
- zumindest eine Bearbeitungseinheit (11) zum Beladen und/oder Entladen der Lagereinheit (3) mit den plattenförmigen Objekten (2),
- ein Beladesystem (8) zur Aufnahme einer Auswahl der plattenförmigen Objekte (2) in einer Beladungsanordnung,
- eine Steuerungseinheit zur Berechnung der Beladungsanordnung (6), wobei die Steuerungseinheit ausgelegt ist, um auf Basis der jeweiligen erfassten Parameter und/oder der jeweiligen Einlagerungsorte sowie unter Berücksichtigung vorgebbarer Hauptbedingungen eine Beladungsanordnung (6) der Auswahl der plattenförmigen Objekte (2) zu berechnen, und
wobei die Erfassungseinheit (10), die zumindest eine Bearbeitungseinheit (11), die zumindest eine Lagereinheit (3) und das Beladesystem (8) in einer Objektförderrichtung (13) hintereinander angeordnet und als Fertigungsstraße miteinander verbunden sind.

10. System nach Anspruch 9, **dadurch gekennzeichnet, dass** das System eine Kontrolleinheit (23) zur Überprüfung der plattenförmigen Objekte (2) hinsichtlich eines oder sämtlicher der erfassten Parameter umfasst.

11. System nach einem der Ansprüche 9 oder 10, **dadurch gekennzeichnet, dass** das System eine weitere Lagereinheit (4) umfassend mehrere Einlagerungsorte (5) zur Aufnahme plattenförmiger Objekte (2) aufweist, wobei die weitere Lagereinheit (4) Teil der Fertigungsstraße ist.

12. System nach Anspruch 11, **dadurch gekennzeichnet, dass** das System eine weitere Bearbeitungseinheit (12) zum Beladen und/oder Entladen der weiteren Lagereinheit (4) mit plattenförmigen Objekten (2) aufweist.

13. System nach Anspruch 12, **dadurch gekennzeichnet, dass**
- die Bearbeitungseinheit (11) für das Beladen und das Entladen der Lagereinheit (3) sowie für das Beladen und das Entladen der weiteren Lagereinheit (4) angeordnet und ausgebildet ist,
oder, dass
- die Bearbeitungseinheit (11) für das Beladen der Lagereinheit (3) angeordnet und ausgebildet ist und
- die weitere Bearbeitungseinheit (12) für das Entladen der Lagereinheit (3) sowie für das Beladen der weiteren Lagereinheit (4) angeordnet und ausgebildet ist.

14. System nach einem der Ansprüche 9 bis 13, **dadurch gekennzeichnet, dass**
- zwischen der Lagereinheit (3) und dem Beladesystem (8),
- und/oder, sofern abhängig von Anspruch 11, zwischen der weiteren Lagereinheit (4) und dem Beladesystem (8)
ein Förderabschnitt der Fertigungsstraße ausgebildet ist, um die plattenförmigen Objekte (2) von der Lagereinheit (3) und/oder von der weiteren Lagereinheit (4) zum Beladesystem (8) zu transportieren, wobei der Förderabschnitt zumindest einen Zustelltisch (14) zum geradlinigen Fördern und/oder Drehen plattenförmiger Objekte (2) und/oder zumindest einen Kipptisch (15a) zum Überführen plattenförmiger Objekte (2) aus einer Schräglage in eine horizontale Lage und umgekehrt umfasst.

## Claims

1. Method for loading a heat treatment unit (1) with plate-shaped objects (2), in particular glass plates, wherein the method comprises the following steps of:
a. detecting in each case at least one parameter of plate-shaped objects (2) of an object stream, wherein a length, a width, a thickness, a diameter, a coating type, a material type and/or a batch number is or are detected as parameters of the respective plate-shaped object (2);
b. storing the plate-shaped objects (2) in a storage unit (3) having a plurality of storage locations (5);
c. storing information on the respective storage location (5) and/or on the respective at least one detected parameter of the respective plate-shaped objects (2);
d. calculating a loading arrangement (6) of a selection of the plate-shaped objects (2) for the arrangement of the plate-shaped objects (2) of this selection on or in a loading system (8), wherein the calculation is carried out on the basis of the stored information and by taking into account predeterminable main conditions;
e. removing the selection of plate-shaped objects (2) from the respective storage location (5);
f. transporting the selection of plate-shaped objects (2) to the loading system (8);
g. transferring the selection of plate-shaped objects (2) to the loading system (8) in a loading sequence corresponding to the calculated loading arrangement (6);
h. positioning the selection of plate-shaped objects (2) on or in the loading system (8), whereby the loading arrangement (6) is produced;
i. conveying the selection of plate-shaped objects (2) located in the loading arrangement (6) from the loading system (8) into the heat treatment unit (1).

2. Method according to claim 1, **characterized in that,** based on the loading arrangement (6), presorting is carried out before step e) by changing the storage location (5) of one or more of the plate-shaped objects (2).

3. Method according to one of claims 1 or 2, **characterized in that,** based on the corresponding loading arrangement (6), presorting is carried out before step e) by removing one or more of the plate-shaped objects (2) from the storage unit (3) and storing them in a further storage unit (4) having a plurality of storage locations (5) .

4. Method according to one of claims 1 to 3, **characterized in that,** after conveying the loading arrangement (6) into the heat treatment unit (1), a further selection of the plate-shaped objects (2) is positioned on or in the loading system (8) in order to produce a further loading arrangement (9).

5. Method according to one of claims 1 to 4, **characterized in that** the plate-shaped objects (2) are checked with regard to individual or all of the detected parameters after the detection of the at least one parameter and before storage.

6. Method according to one of claims 1 to 5, **characterized in that** the main conditions are a maximization of a packing density of the loading system (8) and/or a minimization of the loading time of the loading system (8), wherein preferably secondary or boundary conditions are also taken into account when calculating the loading arrangement.

7. Method according to one of claims 1 to 6, **characterized in that** two or more of steps e), f), g) and h) are carried out simultaneously for different plate-shaped objects (2) of the selection.

8. Method according to one of claims 1 to 7, **characterized in that** the stored information of plate-shaped objects (2) and/or the loading arrangement (6) of a selection is transferred to a processing station (9) arranged downstream of the heat treatment unit (1).

9. System for loading a heat treatment unit (1) with plate-shaped objects (2), in particular glass plates, comprising
- a detection unit (10) for detecting in each case at least one parameter of plate-shaped objects (2) of an object stream, wherein the detection unit (10) detects a length, a width, a thickness, a diameter, a coating type, a material type and/or a batch number as parameters of the respective plate-shaped object (2),
- at least one storage unit (3) comprising a plurality of storage locations (5) for accommodating the plate-shaped objects (2),
- at least one processing unit (11) for loading and/or unloading the storage unit (3) with the plate-shaped objects (2),
- a loading system (8) for accommodating a selection of the plate-shaped objects (2) in a loading arrangement,
- a control unit for calculating the loading arrangement (6), wherein the control unit is designed to calculate a loading arrangement (6) of the selection of the plate-shaped objects (2) on the basis of the respective detected parameters and/or the respective storage locations and taking into account predeterminable main conditions, and
wherein the detection unit (10), the at least one processing unit (11), the at least one storage unit (3) and the loading system (8) are arranged one behind the other in an object conveying direction (13) and are connected to one another as a production line.

10. System according to claim 9, **characterized in that** the system comprises a monitoring unit (23) for checking the plate-shaped objects (2) with respect to one or all of the detected parameters.

11. System according to one of claims 9 or 10, **characterized in that** the system comprises a further storage unit (4) comprising a plurality of storage locations (5) for accommodating plate-shaped objects (2), wherein the further storage unit (4) is part of the production line.

12. System according to claim 11, **characterized in that** the system has a further processing unit (12) for loading and/or unloading the further storage unit (4) with plate-shaped objects (2).

13. System according to claim 12, **characterized in that**
- the processing unit (11) is arranged and designed for loading and unloading the storage unit (3) and for loading and unloading the further storage unit (4),
or **in that**
- the processing unit (11) is arranged and designed for loading the storage unit (3) and
- the further processing unit (12) is arranged and designed for unloading the storage unit (3) and for loading the further storage unit (4).

14. System according to one of claims 9 to 13, **characterized in that** a conveying section of the production line is formed
- between the storage unit (3) and the loading system (8),
- and/or, if dependent on claim 11, between the further storage unit (4) and the loading system (8),
in order to transport the plate-shaped objects (2) from the storage unit (3) and/or from the further storage unit (4) to the loading system (8), wherein the conveying section comprises at least one feed table (14) for conveying and/or rotating plate-shaped objects (2) in a straight line and/or at least one tilting table (15a) for transferring plate-shaped objects (2) from an inclined position into a horizontal position and vice versa.

## Revendications

1. Procédé pour charger une unité de traitement thermique (1) avec des objets (2) en forme de plaque, en particulier des plaques de verre, lequel procédé comprend les étapes suivantes :
a) acquisition d'au moins un paramètre de chaque objet en forme de plaque (2) d'un flux d'objets, le paramètre acquis de chaque objet en forme de plaque (2) étant une longueur, une épaisseur, un diamètre, un type de revêtement, un type de matériau et/ou un numéro de lot ;
b) entreposage des objets en forme de plaque (2) dans une unité d'entreposage (3) avec plusieurs emplacements d'entreposage (5) ;
c) enregistrement d'informations concernant l'emplacement d'entreposage (5) et/ou l'au moins un paramètre acquis pour chaque objet en forme de plaque (2) ;
d) calcul d'une disposition de chargement (6) d'une sélection des objets en forme de plaque (2) pour la disposition des objets en forme de plaque (2) de cette sélection sur ou dans un système de chargement (8), lequel calcul est effectué sur la base des informations en mémoire et en tenant compte de conditions principales pouvant être prédéterminées ;
e) retrait de la sélection d'objets en forme de plaque (2) de l'emplacement d'entreposage (5) correspondant ;
f) transport de la sélection d'objets en forme de plaque (2) vers le système de chargement (8) ;
g) transfert de la sélection d'objets en forme de plaque (2) sur le système de chargement (8) dans une séquence de chargement correspondant à la disposition de chargement (6) ;
h) positionnement de la sélection d'objets en forme de plaque (2) sur ou dans le système de chargement (8) de façon à produire la disposition de chargement (6) ;
i) acheminement de la sélection d'objets en forme de plaque (2) placés dans la disposition de chargement (6) du système de chargement (8) à l'unité de traitement thermique (1).

2. Procédé selon la revendication 1, **caractérisé en ce qu'**un tri préalable est effectué sur la base de la disposition de chargement (6) avant l'étape e) par le changement de l'emplacement d'entreposage (5) d'un ou plusieurs des objets en forme de plaque (2).

3. Procédé selon l'une des revendications 1 à 2, **caractérisé en ce qu'**un tri préalable est effectué sur la base de la disposition de chargement (6) avant l'étape e) par le retrait d'un ou plusieurs des objets en forme de plaque (2) de l'unité d'entreposage (3) et leur entreposage dans une autre unité d'entreposage (4) munie de plusieurs emplacements d'entreposage (5).

4. Procédé selon l'une des revendications 1 à 3, **caractérisé en ce que**, après le transport de la disposition de chargement (6) dans l'unité de traitement thermique (1), une autre sélection d'objets en forme de plaque (2) est positionnée sur ou dans le système de chargement (8) pour produire une autre disposition de chargement (9).

5. Procédé selon l'une des revendications 1 à 4, **caractérisé en ce que** les objets en forme de plaque (2) sont contrôlés après l'acquisition de l'au moins un paramètre et avant l'entreposage afin de vérifier certains ou tous les paramètres acquis.

6. Procédé selon l'une des revendications 1 à 5, **caractérisé en ce que** les conditions principales sont la maximisation d'une densité de remplissage du système de chargement (8) et/ou la minimisation du temps de chargement du système de chargement (8), des conditions secondaires ou aux limites étant de préférence prises en compte aussi pour le calcul de la disposition de chargement.

7. Procédé selon l'une des revendications 1 à 6, **caractérisé en ce que** deux ou plusieurs des étapes e), f), g) et h) sont exécutées simultanément pour différents objets en forme de plaque (2) de la sélection.

8. Procédé selon l'une des revendications 1 à 7, **caractérisé en ce que** les informations en mémoire des objets en forme de plaque (2) et/ou la disposition de chargement (6) d'une sélection sont transmises à un poste de traitement (9) situé en aval de l'unité de traitement thermique (1).

9. Système pour charger une unité de traitement thermique (1) avec des objets en forme de plaque (2), en particulier des plaques de verre, comprenant :
- une unité d'acquisition (10) destinée à acquérir au moins un paramètre de chaque objet en forme de plaque (2) d'un flux d'objets, laquelle unité d'acquisition (10) acquiert comme paramètres de chaque objet en forme de plaque (2) une longueur, une largeur, une épaisseur, un diamètre, un type de revêtement, un type de matériau et/ou un numéro de lot ;
- au moins une unité d'entreposage (3) comprenant plusieurs emplacements d'entreposage (5) destinés à recevoir les objets en forme de plaque (2) ;
- au moins une unité de traitement (11) pour charger et/ou décharger l'unité d'entreposage (3) avec les objets en forme de plaque (2) ;
- un système de chargement (8) destiné à recevoir une sélection d'objets en forme de plaque (2) dans une disposition de chargement ;
- une unité de commande pour calculer la disposition de chargement (6), laquelle unité de commande est conçue pour calculer, sur la base des paramètres acquis respectifs et/ou des emplacements d'entreposage respectifs et en tenant compte de conditions préalables pouvant être prédéterminées, une disposition de chargement (6) de la sélection d'objets en forme de plaque (2), et
dans lequel l'unité d'acquisition (10), l'au moins une unité de traitement (11), l'au moins une unité d'entreposage (3) et le système de chargement (8) sont disposées les uns derrière les autres dans un sens d'acheminement des objets (13) et reliées entre eux pour former une chaîne de fabrication.

10. Système selon la revendication 9, **caractérisé en ce qu'**il comprend une unité de contrôle (23) destinée à contrôler les objets en forme de plaque (2) pour vérifier un ou tous les paramètres acquis.

11. Système selon l'une des revendications 9 ou 10, **caractérisé en ce qu'**il comporte une autre unité d'entreposage (4) comprenant plusieurs emplacements d'entreposage (5) pour recevoir des objets en forme de plaque (2), laquelle autre unité d'entreposage (4) fait partie de la chaîne de fabrication.

12. Système selon la revendication 11, **caractérisé en ce qu'**il comporte une autre unité de traitement (12) pour charger et/ou décharger l'autre unité d'entreposage (4) avec des objets en forme de plaque (2).

13. Système selon la revendication 12, **caractérisé en ce que**
- l'unité de traitement (11) est disposée et conçue pour charger et décharger l'unité d'entreposage (3) et pour charger et décharger l'autre unité d'entreposage (4)
ou **en ce que**
- l'unité de traitement (11) est disposée et conçue pour charger l'unité d'entreposage (3) et
- l'autre unité de traitement (12) est disposée et conçue pour décharger l'unité d'entreposage (3) et pour charger l'autre unité d'entreposage (4).

14. Système selon l'une des revendications 9 à 13, **caractérisé en ce qu'**une section d'acheminement de la chaîne de fabrication est formée
- entre l'unité d'entreposage (3) et le système de chargement (8)
- et/ou, s'il y a une dépendance de la revendication 11, entre l'autre unité d'entreposage (4) et le système de chargement (8),
pour transporter les objets en forme de plaque (2) de l'unité d'entreposage (3) et/ou de l'autre unité d'entreposage (4) au système de chargement (8), la section d'acheminement comprenant au moins une table d'alimentation (14) pour l'acheminement en ligne droite et/ou la rotation d'objets en forme de plaque (2) et/ou au moins une table basculante (15a) pour transférer des objets en forme de plaque (2) d'une position oblique à une position horizontale et vice versa.
